# EUROPEAN PATENT SPECIFICATION

(11) **EP 2 990 894 B1**
(45) Date of publication and mention of the grant of the patent: **26.09.2018**
(21) Application number: 15176304.2
(22) Date of filing: 10.07.2015
(51) Int. Cl.: G05B 19/042, B64F 5/00, G06F 3/0484, G06Q 50/04, G05B 19/418, G06Q 10/06, G06Q 10/08, G06Q 50/28, G06Q 50/30

(54) **SERIAL NUMBER CONTROL VISUALIZATION SYSTEM**
SERIENNUMMERNVISUALISIERUNGSSYSTEM
SYSTÈME DE VISUALISATION DE COMMANDE DE NUMÉRO DE SÉRIE

(30) Priority: 25.08.2014 US 201414467706
(43) Date of publication of application: 02.03.2016
(73) Proprietor: The Boeing Company, Chicago, IL 60606-1596 (US)
(72) Inventor: SENESAC, Christophe J, CHICAGO,IL, 60606-2016 (US)
(74) Representative: Cabinet Plasseraud

(56) References cited:
- US-A1- 2002 007 225
- US-A1- 2007 106 410
- US-A1- 2011 125 303
- US-A1- 2012 071 998
- US-A1- 2012 130 521
- US-A1- 2012 249 588
- US-A1- 2012 304 059
- US-B1- 6 345 207

## Description

### BACKGROUND INFORMATION

### 1. Field:

The present disclosure relates generally to manufacturing and, in particular, to manufacturing vehicles. Still more particularly, the present disclosure relates to a method and apparatus for assembling vehicles in a manufacturing environment.

### 2. Background:

The assembly of an aircraft is an extremely complex process. Hundreds of thousands of parts may be assembled for an aircraft.

The assembly of an aircraft may involve manufacturing different parts of the aircraft in geographically diverse locations. These different parts may then be finally assembled in a single location. For example, different portions of a fuselage of a composite aircraft may be assembled in different locations and flown to a central location where the final assembly line is located. Additionally, other parts such as engines, auxiliary power units, seats, computer systems, line replaceable units, or other components in aircraft may be shipped to this final location for assembly to form the assembled aircraft.

The assembly of the different parts involves assigning tasks to different operators. The assignment of these tasks may take the form of shop order instances. Each shop order instance may include instructions and an identification of parts for a particular assembly in the aircraft.

Operators performing the assembly of an aircraft use shop order instances to determine what tasks they will perform on a daily basis. For example, an operator may identify a task to perform in a shop order instance. The shop order instance identifies the parts to be assembled, work instructions for assembling the parts, and a location where the assembly should be performed.

When an operator identifies a shop order instance assigned to that operator, the operator then identifies the different parts for assembly. Currently, the operator is unable to identify the context of other parts in the aircraft with respect to the part to be assembled. In other words, the operator is not shown the location on the aircraft for the parts to be assembled. Further, the operator is also unable to view other parts that may already be located on the aircraft. In some cases, the assembly of the parts assigned to the operator may depend on the prior assembly of other parts in the aircraft.

Currently, the identification of the location in the shop order instance often takes the form of coordinates in an aircraft. Based on these coordinates, the operator may perform research in databases and computer-aided design models to identify where the assembly should occur. This process may be more time-consuming than desired. Further, it may be difficult to resolve the location information to an actual location on the plane. The increased amount of time may increase the time to assemble an aircraft more than desired. As a result, the number of aircraft that are produced during a period of time may not be as great as desired or those aircraft may be assembled at a greater cost than desired. Examples of repair systems for vehicles which have graphical identifications for mounting parts would be documents US2002/0007225 and US2012/0071998.

Therefore, it would be desirable to have a method and apparatus that takes into account at least some of the issues discussed above, as well as other possible issues.

### SUMMARY

In one illustrative embodiment, a method for visualizing a group of parts in an aircraft is presented. A volume in the aircraft is identified. The group of parts that are serial number controlled within the volume are also identified. The group of parts within the volume are displayed on a display system to form a visualization. The visualization enables locating the group of parts within the aircraft.

In another illustrative embodiment, a method for visualizing a group of parts in an object is presented. A volume in the object is identified. The group of parts that are serial number controlled within the volume are also identified. The group of parts within the volume are displayed on a display system to form a visualization of the group of parts. The visualization enables locating the group of parts within the object.

In yet another illustrative embodiment, an aircraft management system is presented. The aircraft management system comprises an object manager that identifies a volume in an aircraft. The aircraft management system also identifies a group of parts that are serial number controlled within the volume. The aircraft management system also displays the group of parts within the volume on a display system to form a visualization of the group of parts. The visualization enables locating the group of parts within the aircraft.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of a manufacturing environment in accordance with an illustrative embodiment;
**Figure 2** is an illustration of a block diagram of an object manager in accordance with an illustrative embodiment;
**Figure 3** is an illustration of a block diagram of a sectional view in accordance with an illustrative embodiment;
**Figure 4** is an illustration of a block diagram of a volume identifier in accordance with an illustrative embodiment;
**Figure 5** is an illustration of a block diagram of a shop order instance in accordance with an illustrative embodiment;
**Figure 6** is an illustration of a block diagram of a state for a section of an aircraft in accordance with an illustrative embodiment;
**Figure 7** is an illustration of a block diagram of a dependency structure in accordance with an illustrative embodiment;
**Figure 8** is an illustration of a graph of dependencies in accordance with an illustrative embodiment;
**Figure 9** is an illustration of a graphical user interface for viewing statuses of shop order instances in accordance with an illustrative embodiment;
**Figure 10** is an illustration of aircraft positions in a building in accordance with an illustrative embodiment;
**Figure 11** is an illustration of a graphical user interface of aircraft sections in accordance with an illustrative embodiment;
**Figure 12** is an illustration of a graphical user interface for querying a shop order instance in accordance with an illustrative embodiment;
**Figure 13** is an illustration of a graphical user interface showing serial number controlled parts in accordance with an illustrative embodiment;
**Figure 14** is an illustration of a graphical user interface with a visual representation from the shop order instance in accordance with an illustrative embodiment;
**Figure 15** is an illustration of a display of shop order instance information in accordance with an illustrative embodiment;
**Figure 16** is another illustration of a display of shop order instance information in accordance with an illustrative embodiment;
**Figure 17** is an illustration of a flowchart of a process for visualizing an assembly of parts in accordance with an illustrative embodiment;
**Figure 18** is an illustration of a more detailed flowchart of a process for visually displaying an assembly in accordance with an illustrative embodiment;
**Figure 19** is an illustration of a flowchart of a process for identifying the status of tasks in accordance with an illustrative embodiment;
**Figure 20** is an illustration of a flowchart of a process for identifying the status of shop order instances in accordance with an illustrative embodiment;
**Figure 21** is an illustration of a flowchart of a process for identifying information about the status of a shop order instance in accordance with an illustrative embodiment;
**Figure 22** is an illustration of a flowchart of a process for displaying a section in a graphical user interface in accordance with an illustrative embodiment;
**Figure 23** is an illustration of a flowchart of a process for managing dependencies for at least one of a number of parts or a number of tasks in an aircraft in accordance with an illustrative embodiment;
**Figure 24** is an illustration of a flowchart of a process for displaying graphical indicators of dependencies in accordance with an illustrative embodiment;
**Figure 25** is an illustration of a flowchart of process for visualizing a group of parts in an aircraft in accordance with an illustrative embodiment;
**Figure 26** is an illustration of a flowchart of a process for displaying a group parts on a display in accordance with an illustrative embodiment;
**Figure 27** is an illustration of a flowchart of a process for generating a visualization of a section of an aircraft in accordance with an illustrative embodiment;
**Figure 28** is an illustration of a block diagram of a data processing system in accordance with an illustrative embodiment;
**Figure 29** is an illustration of a block diagram of an aircraft manufacturing and service method in accordance with an illustrative embodiment;
**Figure 30** is an illustration of a block diagram of an aircraft in which an illustrative embodiment may be implemented; and
**Figure 31** is an illustration of a block diagram of a manufacturing system in accordance with an illustrative embodiment.

### DETAILED DESCRIPTION

The illustrative embodiments recognize and take into account one or more different considerations. For example, the illustrative embodiments recognize and take into account that in performing tasks in shop order instances, some shop order instances should be completed prior to other shop order instances. The illustrative embodiments recognize and take into account that in some cases, completing one shop order instance before another may require some disassembly or rework of parts.

For example, the completion of one assembly may block installation of another assembly in the aircraft. In another case, one assembly may be attached to the second assembly, requiring the second assembly to be completed.

Further, the illustrative embodiments also recognize and take into account that the assembly of parts in the aircraft may not always be performed in a desired sequence. Additionally, a part may have an inconsistency that may be caused by an operator or the part may have been received with the inconsistency. As a result, the part may be installed and other parts also may be installed prior to identifying the inconsistency. As a result, the order of the assignment of installations may change and cause confusion to an operator installing other parts.

As another example, inspections of assembly may need to be performed before another assembly is completed. For example, installation of a second assembly may block access to the first assembly such that inspection of the first assembly may be difficult or impossible to perform. As a result, the inspection may be performed after partial or full removal of the second assembly. The second assembly is then reinstalled after the inspection.

The illustrative embodiments recognize and take into account that currently, operators may see a list of shop order instances and whether they have been completed. With respect to shop order instances, an operator assigned a shop order instance may see a list of parts for the shop order assembly. Further, the operator also may see instructions to assemble the parts to form the assembly for the shop order instance.

However, the illustrative embodiments recognize and take into account that currently, an operator is unable to visualize the different tasks performed to assemble parts to form an assembly for a shop order instance. In other words, operators are currently unable to see the geometry of the parts that form the assembly for a shop order instance. In addition, the operator is also currently unable to easily see the assembly within the context of other parts that may be present in the aircraft. As a result, this inefficiency may increase the amount of time needed to assemble an aircraft more than desired.

In yet another example, the illustrative embodiments recognize and take into account that one task that may be performed using shop order instances is identifying serial number controlled parts in the aircraft. The illustrative embodiments recognize and take into account that regulations from governmental agencies, requirements for the manufacturer, or other entities may require some parts in aircraft to be recorded so that those parts can be tracked. These parts are serial number controlled (SNC) parts. For example, Federal Aviation Administration (FAA) has a requirement to record parts that are serial number controlled. The recorded parts are reported in an aircraft readiness log (ARL) to the Federal Aviation Administration. This log is required to be completed and sent to the Federal Aviation Administration prior to releasing the aircraft to a customer.

The serial number controlled parts that are to be recorded may be for thousands of parts for aircraft. The illustrative embodiments recognize and take into account that recording the serial numbers for these parts is a time-consuming and labor intensive process. The illustrative embodiments recognize and take into account that finding these parts in aircraft may be very time-consuming and difficult if the operator searching for the parts to record does not know where those parts are located.

The illustrative embodiments recognize and take into account that currently, an operator may view a model of the aircraft, but is unable to visualize the locations of the parts that need to be located in the aircraft. In addition, the operator is also currently unable to easily see the assembly within the context of other parts that may be present in the aircraft. As a result, this inefficiency may increase the amount of time needed to locate parts that are serial number controlled to make a list of the parts or to verify an existing list of the parts in the aircraft.

Thus, the illustrative embodiments provide a method and apparatus for visualizing an assembly of parts. An identification of a shop order instance is received for the assembly of parts. A volume is identified for the shop order instance. The assembly of parts within the volume is displayed in context with other parts within the volume.

The illustrative embodiments also provide a method and apparatus for visualizing a group of parts in an aircraft. For example, a process in one illustrative example identifies a volume in the aircraft. The process also identifies the group of parts that are serial number controlled within the volume. The process displays the group of parts within the volume on a display system to form a visualization.

An operator uses the visualization to locate the group of parts within the aircraft. In other words, an operator may view the visualization and use that visualization to find the physical part that is serial number controlled in an aircraft. The visualization reduces the amount of time needed to find a part in an aircraft to perform an operation such as identifying a serial number or some other unique identifier for the part. The identification may be made to record the serial number or verify one that has already been recorded for the part.

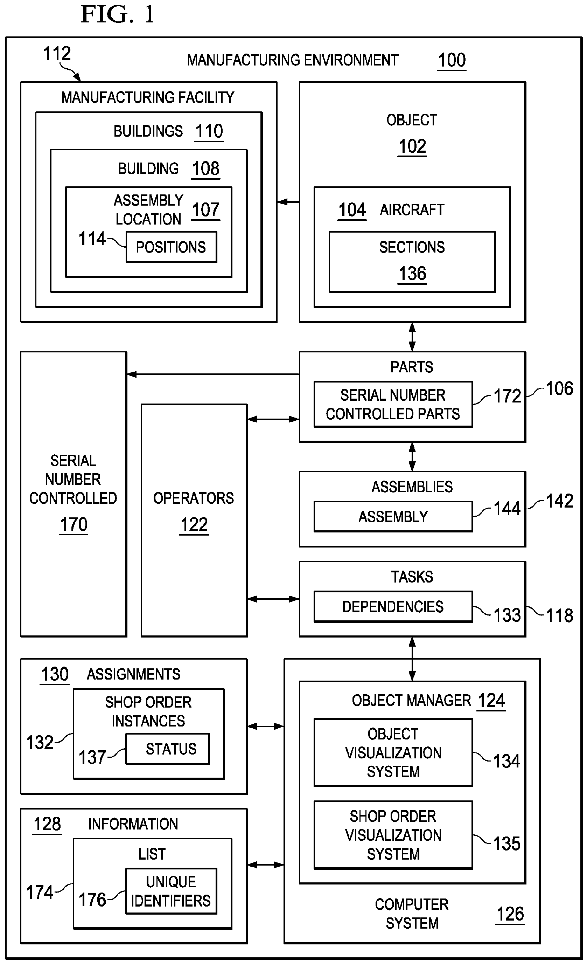

With reference now to the figures, and in particular, with reference to **Figure 1**, an illustration of a block diagram of a manufacturing environment is depicted in accordance with an illustrative embodiment. Manufacturing environment **100** is an example of an environment in which object **102** may be assembled.

In this illustrative example, object **102** takes the form of aircraft **104**. Object **102** is completed by assembling parts **106**. A part is a group of the components. As used herein, a "group of," when used with reference items, means one or more items. For example, a group of components is one or more components.

A part may be a single component or assembly of components in these depicted examples. For example, the part may be a seat, a row of seats, an in-flight entertainment system, a duct, a system of ducts, a global positioning system receiver, an engine, an engine housing, an inlet, or other suitable types of parts.

In this illustrative example, assembling parts **106** may take place in assembly location **107** in building **108** of buildings **110** at manufacturing facility **112**. The assembly of parts **106** in building **108** may occur in positions **114** in assembly location **107** for object **102**. Each position in positions **114** is a location in building **108** in which a group of tasks **118** is performed to assemble object **102**.

In these illustrative examples, a task is a piece of work. A task may be comprised of one or more operations that are performed by a group of operators **122** assigned to work on the assembly of object **102**.

In the illustrative examples, object manager **124** may be used to manage the assembly of object **102**. When object **102** is aircraft **104**, object manager **124** may be part of an aircraft management system. Object manager **124** may be implemented in software, hardware, firmware, or a combination thereof. When software is used, the operations performed by object manager **124** may be implemented in program code configured to run on a processor unit. When firmware is used, the operations performed by object manager **124** may be implemented in program code and data and stored in persistent memory to run on a processor unit. When hardware is employed, the hardware may include circuits that operate to perform the operations in object manager **124**.

In the illustrative examples, the hardware may take the form of a circuit system, an integrated circuit, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, or other suitable hardware devices. Additionally, the processes may be implemented in organic components integrated with inorganic components and/or may be comprised entirely of organic components excluding a human being. For example, the processes may be implemented as circuits in organic semiconductors.

As depicted, object manager **124** may be implemented in computer system **126**. Computer system **126** is one or more computers. When more than one computer is present, the computers in computer system **126** may communicate with each other using a communications medium such as a network. Computer system **126** may be located all in the same location or in different geographic locations. For example, computer system **126** may be distributed through buildings **110** or located in building **108**. Portions of computer system **126** may even be located in another geographic location separate from manufacturing facility **112**.

In managing the assembly of object **102**, object manager **124** may manage tasks **118** and information **128** about object **102.** In the illustrative example, the management of tasks **118** may include at least one of assigning tasks **118** to operators **122**, monitoring the status of tasks **118**, organizing tasks **118**, providing information about tasks **118**, or other suitable operations. Information **128** may include, for example, the models of objects, part inventories, or other suitable information relating to object **102.**

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C or item B and item C. The item may be a particular object, thing, or a category. In other words, at least one of means any combination of items and number of items may be used from the list but not all of the items in the list are required.

In these illustrative examples, object manager **124** may manage tasks **118** using assignments **130** in the form of shop order instances **132**. For example, object manager **124** may assign tasks through the use of shop order instances **132** to operators **122** for performance and assembling of object **102**. Additionally, the status of shop order instances **132** may be used to identify the state of assembly of object **102** by operators **122**.

Shop order instances **132** may include various types of operations. For example, shop order instances **132** may include when particular parts in parts **106** should be assembled, when inspections of parts **106** assembled in object **102** should be made, or other suitable types of operations. As another example, other operations may include rework of one or more parts **106** assembled in object **102**.

In this illustrative example, one task in tasks **118** that may be defined by shop order instances **132** includes identifying parts **106** that are serial number controlled **170**. These types of parts **106** are referred to as serial number controlled parts **172**. The identification of parts **106** that are serial number controlled **170** include, for example, at least one of locating and recording unique identifiers for parts **106** or verifying unique identifiers that have been previously reported for parts **106**. In this illustrative example, the unique identifiers are serial numbers.

Additionally, tasks **118** may have dependencies **133**. In other words, tasks **118** may be performed in a particular order. Dependencies **133** may dictate when tasks within tasks **118** should be performed relative to other tasks in tasks **118**. Dependencies may also be for parts **106** in addition to or in place of tasks **118**. In this form, dependencies **133** may result in dependencies **133** for tasks **118**.

As a result, dependencies **133** may affect the manner in which assignments **130** are made as shop order instances **132**. In particular, dependencies **133** may be used to determine when shop order instances **132** should be performed.

In these illustrative examples, object manager **124** may provide different functions and capabilities for assembling object **102**. For example, object manager **124** may include at least one of object visualization system **134**, shop order visualization system **135**, or other types of systems. The systems may be implemented using hardware, software, or some combination thereof.

In one illustrative example, object visualization system **134** may provide a visualization of object **102** to operators **122**. In particular, operators **122** may perform queries using object visualization system **134** to view a number of sections **136** in object **102**. In particular, sections **136** may be sections that correspond to sections at manufacturing facility **112** for assembly of object **102**, such as aircraft **104**.

In these illustrative examples, the manufacturing may include at least one of fabricating components for parts, assembling components to form parts, assembling parts for object **102**, or some other suitable manufacturing operation performed to assemble object **102**.

For example, object manager **124** may provide visual information about all of object **102** or one or more specific sections of object **102.** This type of visualization may be especially useful when object **102** takes the form of aircraft **104**. Information **128** may be used when operators **122** perform tasks **118** with respect to parts **106** to assemble aircraft **104**.

In another illustrative example, shop order visualization system **135** may provide a visualization of status **137** of shop order instances **132**. This information may be provided visually to operators **122**. In particular, object manager **124** may function as shop order visualization system **135** as well as provide other suitable functions in managing the assembly of object **102**.

In some illustrative examples, the visualization of status **137** of shop order instances **132** may be provided with respect to parts **106** present in aircraft **104** for a particular state of aircraft **104**. In this manner, operators **122** may visualize parts **106** in aircraft **104** that are actually present for a particular state, such as a particular state along positions in an assembly line for aircraft **104** or other suitable objects. For example, the state may be a current state of aircraft **104** in the location where operators **122** perform tasks **118** to assemble aircraft **104**.

Further, shop order visualization system **135** also may provide for a visualization of assemblies **142** of parts **106**. This visualization may aid operators **122** in performing assembly of parts **106** for aircraft **104**. For example, this visualization may provide context for assembly **144** with respect to assemblies **142** of parts **106** in a particular location within aircraft **104**.

For example, the visualization of a number of sections **136** in object **102** generated by object visualization system **134** in object manager **124** may include a visualization of parts **106** such as serial number controlled parts **172**. This visualization may aid operators **122** in finding the locations of serial number controlled parts **172** within aircraft **104**. In this manner, operators may record unique identifiers **176** for serial number controlled parts **172**, verify for unique identifiers **176** recorded in list **174**, or perform other operations with respect to serial number controlled parts **172**.

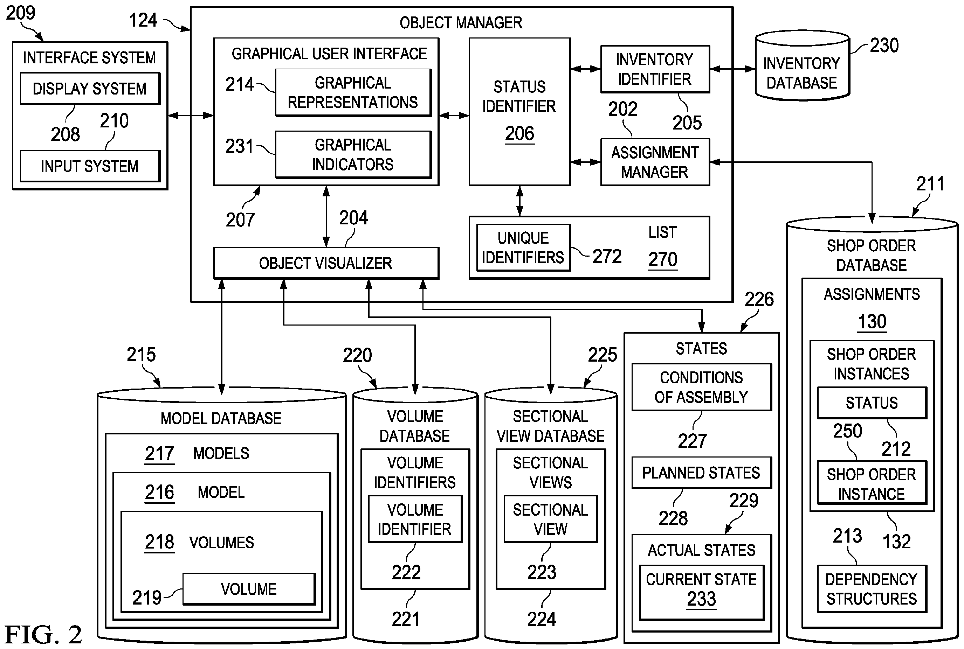

Turning now to **Figure 2**, an illustration of a block diagram of an object manager is depicted in accordance with an illustrative embodiment. Examples of components that may be implemented in object manager **124** are shown in this figure.

As depicted, object manager **124** includes a number of different components. For example, object manager **124** includes assignment manager **202**, object visualizer **204**, inventory identifier **205**, status identifier **206**, and graphical user interface **207.** These different components and object manager **124** may be implemented using hardware, software, or some combination thereof. As used herein, a "number of" when used with reference to items means one or more items. For example, a number of different components means one or more different components.

Graphical user interface **207** is configured to provide an interface for operators **122** to interact with object manager **124**. In these illustrative examples, graphical user interface **207** may be displayed on display system **208** in interface system **209**. Display system **208** is hardware and may include one or more display devices selected from at least one of a liquid crystal display (LCD), a light emitting display (LED), an organic light emitting display (OLED), or other suitable types of display devices.

Input may be received from operators **122** through input system **210** in interface system **209**. In this illustrative example, input system **210** is a hardware system. Input system **210** may include one or more devices. These devices may include at least one of a keyboard, a mouse, a joystick, a touchscreen panel, or other suitable types of devices.

In this illustrative example, assignment manager **202** is configured to manage assignments **130** in the form of shop order instances **132** in shop order database **211**. For example, assignment manager **202** may be used to assign tasks **118** to operators **122** using shop order instances **132.** Additionally, assignment manager **202** also may be configured to receive information about the performance of tasks **118** assigned through shop order instances **132**. This information may be used by assignment manager **202** to generate and update status **212** for shop order instances **132**.

Additionally, shop order database **211** also may include dependency structures **213**. Dependency structures **213** may be used to describe dependencies **133** between at least one of parts **106** or tasks **118**. For example, a first part may need to be installed before a second part is installed. As another example, a first task for installing a part may need to be performed prior to a second task for inspecting the installation of the part. Dependency structures **213** describe these relationships between at least one of parts **106** or tasks **118** for assembling object **102**.

Object visualizer **204** is configured to generate graphical representations **214** for parts **106**. Graphical representations **214** may be displayed on graphical user interface **207** in display system **208**. Display system **208** may include a display device at a computer or a workstation. In other illustrative examples, display system **208** may include a portable display device such as a tablet computer, a mobile phone, or some other portable device that operators **122** may carry while performing a task on aircraft **104**.

As depicted, object visualizer **204** is configured to access model database **215**. Object visualizer **204** may identify model **216** from models **217** in model database **215** for object **102** and, in particular, for aircraft **104**. Model **216** is used to generate graphical representations **214** in this illustrative example.

In these illustrative examples, graphical representations **214** may be generated for sections **136** of object **102**, which may take the form of aircraft **104.** In this illustrative example, model **216** may be identified for object **102** from models **217** in model database **215**. Models **217** may take various forms. For example, without limitation, models **217** may include computer-aided design (CAD) files.

Each model in models **217** may be for a particular object. These objects may be of the same type but used for different instances. For example, models **217** may be for a particular type of aircraft but may be used for a different instance. Each model may be for a particular aircraft that is being assembled for a customer. Further, the different models may be for the same aircraft model but may have variations for different options selected by a customer. In other illustrative examples, models **217** may include models for different types of aircraft **104**.

The generation of graphical representations **214** may be based on all of model **216** or a group of volumes **218** in model **216**. These items may have different shapes. For example, volume **219** in volumes **218** may be a cube, a cuboid, a cylinder, a sphere, or some other suitable shape. As yet another illustrative example, volume **219** may have an irregular shape.

In these illustrative examples, volume **219** is for at least a portion of a part in parts **106** of object **102**. Volume **219** may be large enough to encompass the part. Volume **219** may also be larger than the part. In these illustrative examples, volume **219** may comprise an amount of space around the part for viewing the part in a graphical user interface. For example, the amount of space around the part may be for viewing the part in the graphical user interface from one or more angles. In this example, the one or more angles may be one or more angles from the point of view of an operator. In this example, the point of view of the operator may be of an operator performing a task associated with the part.

In one illustrative example, the identification of volume **219** may be based on the selection of shop order instance **250** in shop order instances **132**. In this illustrative example, shop order instance **250** is for assembly **144**. In these illustrative examples, assembly **144** is comprised of two or more of parts **106** that are assembled or put together. In this illustrative example, shop order instance **250** may be for the assembly, inspection, rework, or other operations with respect to assembly **144**.

As depicted, volume **219** may be for assembly **144** for shop order instance **250**. In other words, volume **219** encompasses assembly **144**. Further, in the illustrative examples, volume **219** also includes other assemblies within assemblies **142** that may be adjacent to or within some selected distance of assembly **144**.

The selected distance may be selected in a number of different ways. For example, the selected distance may be the distance at which other assemblies of parts may affect the manner in which an operator performs the assembly of parts to form an assembly for a particular shop order instance. In other illustrative examples, the selected distance for the volume may be based on preselected distances based on manufacturing specifications, inspection procedures, and other factors.

In the illustrative examples, volume **219** may be identified dynamically when an operator selects shop order instance **250** that includes assembly **144**. In other illustrative examples, volume **219** for assembly **144** may be identified and stored within volume database **220**. That is, a group of volumes **218** may be identified in model **216** using volume database **220** in which the group of volumes **218** is for assemblies **142** of parts **106** for aircraft **104**.

As depicted, a group of volumes **218** may be identified in model **216** using volume database **220**. Volume database **220** is a collection of information that may be used to identify which volumes in volumes **218** may be displayed as graphical representations **214**. In particular, the collection of information may include volume identifiers **221**. For example, volume identifier **222** in volume identifiers **221** may define volume **219** in volumes **218**.

In addition to identifying volumes **218** for assemblies **142**, the group of volumes **218** also may be identified for other purposes in accordance with an illustrative embodiment. For example, an identification of volume **219** also may be made using sectional view **223** from sectional views **224** in sectional view database **225**. In other words, volume **219** corresponds to sectional view **223** of where assembly **144** is located in aircraft **104** in some illustrative examples. Thus, in the illustrative examples, volumes **218** correspond to at least one of sectional views **224**, assemblies **142**, or other selection standards.

Sectional views **224** may include sectional views of the different objects. For example, sectional view **223** may correspond to model **216**. An operator may select the group of volumes **218** using sectional view **223** displayed on graphical user interface **207** in this particular example.

As depicted, sectional views **224** in sectional view database **225** may provide views of sections **136** for object **102**. In the illustrative examples, sections **136** correspond to sections as manufactured for assembly of object **102**. In particular, sections **136** may correspond to sections as manufactured for assembly of aircraft **104**.

Further, sectional views **224** may include different levels of detail. For example, sectional views **224** may include a hierarchy of levels in which the lower levels have more detail about aircraft **104** than higher levels in the hierarchy. In some illustrative examples, a selection of a sectional view in sectional views **224** may result in another sectional view being displayed. In other illustrative examples, a selection made in a sectional view may result in graphical representations **214** being generated from model **216** and displayed on graphical user interface **207**. In this manner, an operator may visually query aircraft **104** through the different sectional views in sectional views **224**.

As a result, operator interaction generating user input with sectional view **223** displayed in graphical user interface **207** may be used to identify volumes **218** in model **216**. The user input may be used to identify volume identifier **222** from volume identifiers **221**. Volume identifier **222** may point to volume **219** in model **216**.

In these illustrative examples, object visualizer **204** may generate queries using volume identifiers **221** to obtain information from model **216** in model database **215**. In particular, information may be data about volume **219** in model **216** for aircraft **104**.

As depicted, object visualizer **204** also may be configured to generate graphical representations **214** for states **226** of object **102**. In these illustrative examples, states **226** may be used for object **102** in the form of aircraft **104**. In other words, aircraft **104** may have different parts in parts **106** that are installed at different states within states **226**. In the illustrative examples, states **226** may take the form of conditions of assembly **227** for object **102**.

For example, states **226** may be based on positions **114** of aircraft **104** within assembly location **107** in building **108**. In these illustrative examples, states **226** may be selected from at least one of planned states **228** or actual states **229**.

Aircraft **104** may have different planned states in planned states **228** in different positions in positions **114**. In this illustrative example, a planned state in planned states **228** includes the parts that are expected to be installed at a particular position in positions **114**. In other words, these parts may or may not have been installed at that position.

In these illustrative examples, the planned state may be based on the past position, current position, or the future position of aircraft **104** in positions **114.** In other words, graphical representations **214** may be generated for any position that is present for planned states **228** for aircraft **104**.

As depicted, an actual state in actual states **229** includes parts **106** that have actually been installed in aircraft **104**. In other words, a particular state may have a selected number of parts that are installed at that state. The actual state in actual states **229** may be based on at least one of a past position or the current position of aircraft **104**. In other words, graphical representations **214** may be generated for parts **106** actually installed at a prior point in time. This prior point in time may be selected by an operator. In this manner, an operator may view tasks **118** performed to install parts **106** at some prior point in time.

Additionally, the actual state may be the current state of aircraft **104**. In other words, graphical representations **214** may be generated for parts **106** that have been installed at the current point in time. In this manner, graphical representations **214** may be used to visualize parts **106** that are currently present in aircraft **104**.

In these illustrative examples, the identification of parts that have already been installed or parts installed in prior points in time may be identified using shop order instances **132**. In particular, shop order instances **132** may indicate whether or what parts in parts **106** have been installed.

Model database **215** is a database of models for objects. In these illustrative examples, these models may be, for example, computer-aided design models (CAD). Of course, any type of model that may provide information about the three-dimensional geometries of objects may be used. Additionally, these models may also include other information about materials, instruction assemblies, or other suitable types of information.

As depicted, inventory identifier **205** is configured to access inventory database **230**. Inventory database **230** contains information about parts. Inventory database **230** may include information about whether parts are in stock, when parts will be delivered, the number of parts available, or other suitable types of information.

As depicted, status identifier **206** is configured to provide a visualization of the status for one or more of shop order instances **132**. In this illustrative example, status identifier **206** is configured to provide an operator a graphical front end through graphical user interface **207** to identify the status of a shop order instance in a specific location of object **102**, such as aircraft **104**. This information may be identified without the operator knowing the coordinates of the particular location.

In these illustrative examples, object visualizer **204** is configured to identify a model of object **102**, such as aircraft **104.** For example, object visualizer **204** may identify the model in model database **215** for object **102**.

Status identifier **206** is also configured to identify shop order instances **132** for object **102**. The identification may be made through interaction with assignment manager **202**.

In the illustrative example, status identifier **206** is also configured to identify status **212** of shop order instances **132**. This identification also may be made through assignment manager **202**. In this illustrative example, status identifier **206** also generates list **270** for parts **106** that are serial number controlled **170**.

Object visualizer **204** is configured to display graphical representations **214** of parts **106** in **Figure 1** for a group of shop order instances **132** in graphical user interface **207** on a display device in display system **208**. The generation of graphical representations **214** may be based on the identification of a group of shop order instances **132**. In other words, object visualizer **204** is configured to receive an identification of parts in the group of shop order instances **132**. The identification of these parts may be used to generate graphical representations **214**.

Information recorded for serial number controlled parts **172** in list **270** includes unique identifiers **272**. As depicted, unique identifiers **272** identify serial number controlled parts **172**. Unique identifiers **272** include, for example, serial numbers for serial number controlled parts **172**. Unique identifiers **272** also may include other types of information in addition to or in place of the serial numbers. For example, manufacturer, model, arbitrary numbers, and other types of identifiers may be used.

List **270** may be used for various purposes. For example, list **270** may be submitted to a regulatory agency, such as the Federal Aviation Administration, as part of a requirement to deliver aircraft **104** to a customer.

As another example, parts **106** that are serial number controlled **170** on list **270** may be parts **106** that require maintenance following a policy. This policy may be set by the manufacturer, regulatory agency, or some other party. For example, parts **106** that are serial number controlled **170** may be parts that have items that may be replaced after some amount of use or period of time. These items in parts **106** may be, for example, batteries, fluids, light bulbs, or other items that may wear out or require replacement. In this manner, list **270** may be used to generate maintenance schedules for inspection, replacement, or some other actions with respect to serial number controlled parts **172** on list **270**.

In these illustrative examples, object visualizer **204** may display graphical representations **214** for parts **106** for a group of shop order instances **132** for parts **106** that are present in object **102** for a particular state in states **226**. In other words, graphical representations **214** of parts **106** may be for parts **106** that are present based on conditions of assembly **227**. In particular, when displaying graphical representations **214** for parts **106** for a group of shop order instances **132**, parts **106** may be present for an actual state in actual states **229** and includes parts **106** that have actually been installed in aircraft **104**. This actual state may be current state **233** of assembly of object **102**. This current state may be for a particular position at which shop order instances **132** are being processed for object **102**.

In other words, parts **106** that are not present in object **102** at a particular position in positions **114** where shop order instances **132** are performed in that position in positions **114** are not displayed with graphical representations **214** of those parts that are absent. As a result, operators **122** at a particular position in positions **114** performing tasks **118** for shop order instances **132** in that position in positions **114** may see more information about shop order instances **132**.

This information about shop order instances **132** may also include an indication as to whether particular ones of parts **106** are serial number controlled parts **172**. As depicted, tasks **118** may include at least one of recording unique identifiers **272**, verifying unique identifiers **176**, or other operations for serial number controlled parts **172**.

Further, status identifier **206** is also configured to display a set of graphical indicators **231** in association with graphical representations **214** of parts **106** displayed on graphical user interface **207** by object visualizer **204**. As used herein, a "set of," when used with reference items, means one or more items. For example, a set of graphical indicators **231** is one or more of graphical indicators **231**.

In these illustrative examples, a graphical indicator in graphical indicators **231** is considered to be displayed in association with a graphical representation in graphical representations **214** when the attention of an operator viewing graphical indicators **231** is drawn to the parts. Thus, the graphical indicator may be displayed as part of the graphical representation, on the graphical representation, in some proximity of the graphical representation, or in some other suitable manner that draws attention to the graphical representation.

The set of graphical indicators **231** displayed in association with graphical representations **214** of parts **106** may take different forms. For example, the set of graphical indicators **231** may be selected from at least one of a color, cross hatching, an icon, highlighting, animation, or other suitable types of graphical indicators.

As depicted, the set of graphical indicators **231** may be displayed in association with a group of parts **106** that are serial number controlled parts **172**. With this display, the set of graphical indicators **231** indicates at least one of a presence of a part that is serial number controlled, whether a serial number for the part that is serial number controlled has been verified, or some other desired information about serial number controlled parts **172**.

Further, the group of shop order instances **132** may be identified in a number of different ways. For example, the group of shop order instances **132** may be identified by a user input to graphical user interface **207** from an operator. For example, the user input received may be a selection of the group of shop order instances **132**.

In another illustrative example, the identification of the group of shop order instances **132** may be identified from a user input selecting a group of parts **106** in object **102** in **Figure 1**. The selection of the group of parts **106** may be one of a selection of the group of parts **106** from a list of parts **106** and a selection of the group of parts **106** from a display of graphical representations **214** of parts **106** in graphical user interface **207**.

In the illustrative example, the group of parts **106** may be a group of serial number controlled parts **172**. This group of parts **106** may be selected from the list **270** or from some other data structure depending on the particular implementation. In another example, the group of serial number controlled parts **172** may be selected from a display of graphical representations **214** of parts **106** in graphical user interface **207**.

In some illustrative examples, the group of parts **106** may be identified from user input selecting shop order instance **250**. With this selection of shop order instance **250**, volume **219** is identified and graphical representations **214** for assembly **144** as well as one or more of other assemblies in assemblies **142** within volume **219** may be displayed.

In this manner, the context of assembly **144** for shop order instance **250** with respect to other assemblies in assemblies **142** may be visualized by an operator. Further, an operator also may view assembly **144** without other assemblies **142** within volume **219** in some illustrative examples.

In this manner, an operator may view instructions in shop order instance **250** and have a better visualization of how parts **106** for assembly **144** should be assembled. Additionally, a better visualization also may be provided as to how parts **106** with respect to assembly **144** should be put together with respect to parts **106** for assemblies **142** that are adjacent to or within a selected location of assembly **144**. Additionally, status identifier **206** may display information about a shop order instance for a part selected from graphical representations **214** of parts **106** displayed in graphical user interface **207**.

With this information in graphical user interface **207**, real-world operations may be performed. For example, the assembly of object **102** in **Figure 1** may be managed based on graphical representations **214** of parts **106** for shop order instances **132** and the set of graphical indicators **231** displayed on graphical user interface **207**. For example, identifications of operations that should be performed may be made using this visualization.

In some illustrative examples, the visualization may be only of parts **106** actually present in aircraft **104** at a particular position in positions **114**. In particular, graphical representations **214** of parts **106** are only for parts **106** that are present for current state **233** of assembly of object **102**. In this manner, operators **122** may more easily visualize tasks **118** that may need to be performed with respect to parts **106** for object **102**.

Further, this visualization for operators **122** with respect to parts **106** actually present in aircraft **104** may also be applied to the display of assembly **144** in volume **219**. As described above, the display of assembly **144** in volume **219** is a display of graphical representations **214** for parts **106** that are present in assembly **144.**

In **Figure 2**, different components are illustrated as being located in object manager **124**. These different components may be used as part of different systems. The systems may include at least one of object visualization system **134**, shop order visualization system **135**, or other suitable systems. A component in object manager **124** may be used in more than one system. For example, object visualizer **204** may be in both object visualization system **134** and shop order visualization system **135**. In other words, the different components illustrated in object manager **124** may be used at the same time by different systems in object manager **124**.

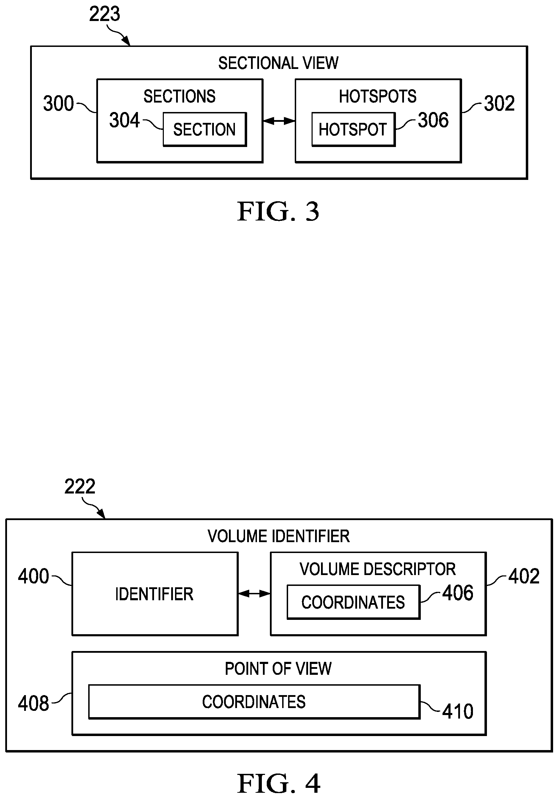

Turning now to **Figure 3**, an illustration of a block diagram of a sectional view is depicted in accordance with an illustrative embodiment. An example of one implementation for sectional view **223** in **Figure 2** is shown.

As depicted, sectional view **223** includes a number of different pieces of information. For example, sectional view **223** includes sections **300** and hotspots **302**.

Sections **300** are graphical representations corresponding to sections **136** for object **102** and, in particular, aircraft **104** in **Figure 1**. In these illustrative examples, sections **300** may be located in a single image, multiple images, or some other suitable form. Graphical representations are in an exploded view in this illustrative example. Further, sections **300** are graphical representations corresponding to sections **136** manufactured for assembly of aircraft **104**.

In these illustrative examples, sections **300** may be selectable. A selection of section **304** in sections **300** having hotspot **306** results in a volume corresponding to section **304** in model **216** being displayed in this illustrative example. Hotspot **306** may be a pointer to volume identifier **222** associated with volume **219**. For example, hotspot **306** may include a universal resource locator, or some other suitable addressing convention to identify volume identifier **222** from volume identifiers **221** in volume database **220**.

Turning now to **Figure 4**, an illustration of a block diagram of a volume identifier is depicted in accordance with an illustrative embodiment. In this illustrative example, one implementation for volume identifier **222** in **Figure 2** is shown.

Volume identifier **222** includes a number of components. As depicted, volume identifier **222** includes identifier **400** and volume descriptor **402**.

Identifier **400** distinguishes volume identifier **222** from others of volume identifiers **221** that may be present in volume database **220**. Identifier **400** may take various forms. For example, identifier **400** may be a word, a phrase, a number, an alphanumeric string, or some other suitable form.

Volume descriptor **402** describes the volume in model **216**. For example, volume descriptor **402** may take the form of coordinates **406**. Coordinates **406** are in the coordinate system used by model **216** in this example. For example, coordinates **406** may be three coordinates that may be used to define a polygon, a cube, or a cuboid. Of course, other information may be present in volume descriptor **402** other than coordinates **406**. For example, volume descriptor **402** may include a single coordinate and a radius used to define volume **219** in a form of a sphere. In still other illustrative examples, a single coordinate may be present with pre-selected offsets that define volume **219** as a cube or some other shape.

The center of volume **219** may be the location of assembly **144** and shop order instance **250**. The location may be the center of all of parts **106** in assembly **144** or may be based on a particular part in parts **106** in assembly **144**.

In some illustrative examples, the volume identifier may also include point of view **408**. Point of view **408** may define the view of the volume displayed to an operator when graphical representations **214** are displayed on a graphical user interface. For example, point of view **408** may include coordinates **410** of the point of view using the coordinate system for the volume.

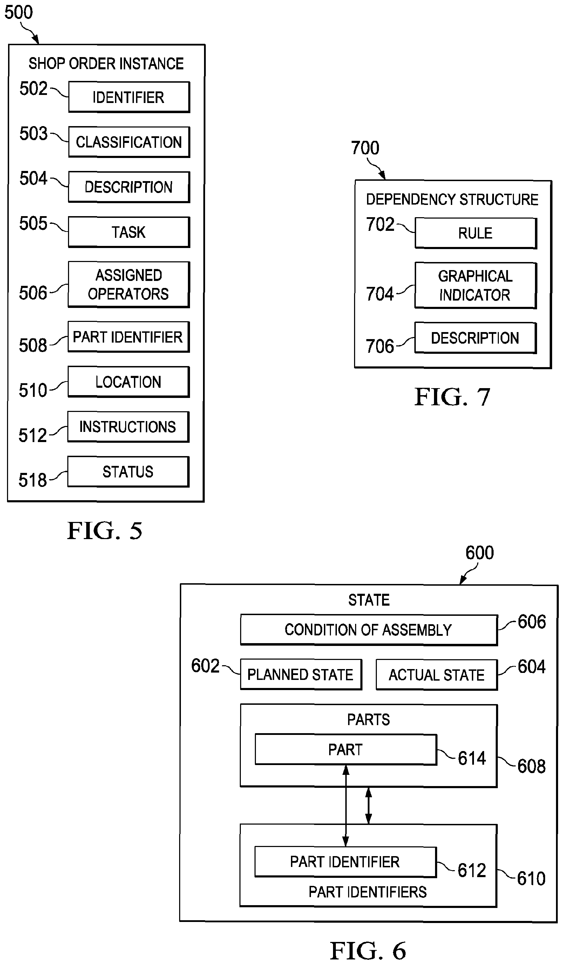

With reference now to **Figure 5**, an illustration of a block diagram of a shop order instance is depicted in accordance with an illustrative embodiment. As depicted, shop order instance **500** is an example of a shop order instance from shop order instances **132** in **Figure 1**.

As depicted, shop order instance **500** may include a number of different parts. Shop order instance **500** includes identifier **502**, classification **503**, description **504**, task **505**, assigned operators **506**, part identifier **508**, location **510**, instructions **512**, and status **518**.

As depicted, identifier **502** may be used to uniquely identify a task in tasks **118** in **Figure 1**. Identifier **502** may be an alphanumeric identifier, a number, or some other suitable type of identifier.

In the illustrative example, classification **503** is used to classify the shop order instance. This classification may be based on the type of task to be performed. For example, the classifications may include seat installation, wiring, line replaceable unit installation, or other suitable types of classifications. The classification may be descriptive or may take the form of an identifier or other type of code.

Description **504** provides a description of task **505**. This description may be a short description to provide the operator information about task **505**. The description may be several words or a single sentence in some illustrative examples.

Task **505** identifies the work to be performed. For example, task **505** may be to install a part, assemble parts, perform an inspection, or some other suitable piece of work.

Assigned operators **506** identifies a group of operators that may be assigned to perform task **505**. In some cases, an operator may not yet be assigned to perform task **505** for shop order instance **500**.

In this illustrative example, part identifier **508** identifies a part assembled in object **102** using shop order instance **500**. In this illustrative example, part identifier **508** is a part number for the part. For example, part identifier **508** may be a serial number, a combination of a serial number and vendor identifier, or some other suitable type of identification that uniquely identifies a particular part from other parts even if those parts are the same type.

In the illustrative examples, part identifier **508** may be used to generate the graphical representation of the parts identified. For example, part identifier **508** may be used to locate the information in a model needed to generate the graphical representation of the part for display.

Location **510** identifies the location where task **505** is to be performed. This location may be in coordinates for object **102** or some other coordinate system.

Instructions **512** are a group of instructions for performing task **505**. In particular, the group of instructions may be for assembling a group of parts. These instructions may be step-by-step instructions, guidance, or other suitable types of instructions. These instructions may provide guidance for assembling parts, inspecting parts, or other suitable operations that may be performed for task **505**. Instructions **512** also may include plans for the location in which task **505** is to be performed.

As depicted, status **518** provides information about the performance of task **505** for shop order instance **500**. In this illustrative example, the status may indicate that work is to be performed, has been completed, is in progress, is unassigned, has been planned, is on hold, is ready, has been canceled, or some other suitable status for shop order instance **500**. The status may be indicated using text, codes, symbols, or other suitable mechanisms. Additionally, if status **518** indicates that the work to be performed has been completed, status **518** also may include a date and time of when work for performing task **505** occurred.

Turning next to **Figure 6**, an illustration of a block diagram of a state for a section of an aircraft is depicted in accordance with an illustrative embodiment. In this depicted example, state **600** is an example of the state in states **226**.

In this illustrative example, state **600** is a data structure that stores information about parts that may be present for state **600**. This data structure may be, for example, a flat file, a linked list, a record in a database, or some other suitable type of data structure.

State **600** may take the form of planned state **602**, actual state **604**, or both. In these illustrative examples, state **600** may be condition of assembly **606** for a particular position of aircraft **104** in positions **114** in **Figure 1**. In particular, condition of assembly **606** may be a condition of assembly in conditions of assembly **227** in **Figure 2**.

In this illustrative example, state **600** includes parts **608**. Parts **608** are parts present in aircraft **104** for state **600** selected for aircraft **104**. As depicted, parts **608** may be identified using part identifiers **610**. Part identifiers **610** may take various forms. For example, part identifier **612** in part identifiers **610** may be a part number for part **614** in parts **608**. For example, part identifier **612** may be a serial number, a combination of a serial number and vendor identifier, or some other suitable type of identification. In the illustrative examples, part identifier **612** may be any identifier that uniquely identifies a particular part from other parts even if those parts are the same type.

In this illustrative example, state **600** may be used by object visualizer **204** in object manager **124** to generate graphical representations **214** for parts **608** that may be present for state **600**. In these illustrative examples, state **600** represents a particular position of aircraft **104** in positions **114**. As a result, only parts **608** present for aircraft **104** are displayed in graphical representations **214** on graphical user interface **207**.

This type of display may be especially useful when managing shop order instances **132**. Operators **122** that may plan or perform other operations with respect to shop order instances **132** may more easily visualize status **137** for shop order instances **132** when parts **608** present for aircraft **104** are displayed in graphical representations **214** on graphical user interface **207**.

With reference now to **Figure 7**, an illustration of a block diagram of a dependency structure is depicted in accordance with an illustrative embodiment. As depicted, dependency structure **700** is an example of a dependency structure in dependency structures **213** in **Figure 2**. In particular, dependency structure **700** is a data structure used to describe a dependency in dependencies **133** in **Figure 1**. As depicted, dependency structure **700** includes rule **702**, graphical indicator **704**, and description **706**.

Dependency structure **700** may be used to generate an indication of the presence of dependency structure **700** with respect to parts that may be installed using shop order instances. For example, dependency structure **700** may be displayed in conjunction with, or as part of, the status of the shop order instance on graphical user interface **207** in **Figure 2**. For example, dependency structure **700** may be used to indicate that a particular shop order instance may not be performed before another one. In other words, the status of the shop order instance may be not ready. Dependency structure **700** may be used to indicate what the other shop order instance may need to be completed.

Rule **702** identifies at least one of a relationship between a number of parts, a relationship between a number of tasks, or a relationship between a number of parts and a number of tasks. For example, rule **702** may identify that a first part is dependent on a second part. The second part may be required to be available before the first part can be installed.

As another illustrative example, rule **702** may identify that a second task requires a first task to be performed before the second task can be performed. The first task may be, for example, inspecting a floor of an aircraft cabin. The second task may be to install a row of seats on the floor after the first task has been completed.

In yet another illustrative example, rule **702** may identify that a task requires a part to perform the task. For example, the task may be to inspect the part, thus, requiring access to the part. Additionally, rule **702** may also identify that a particular type of access is required for a particular task for a particular part. For example, the task may be to inspect the bottom of the part, thus, requiring access to the bottom of the part.

As depicted, graphical indicator **704** identifies an indicator for use when showing a dependency in graphical user interface **207**. Graphical indicator **704** is selected to draw attention to the fact that a dependency is present for a particular shop order instance.

Description **706** in dependency structure **700** identifies information that may be displayed to an operator while showing the dependency in graphical user interface **207**. In one illustrative example, description **706** may identify another shop order instance that may need to be performed. Description **706** may identify the shop order instance identifier, the part, or other information needed for an operator to understand what other work in another shop order instance may depend on the particular part or task for a current shop order instance.

In these illustrative examples, rule **702**, graphical indicator **704**, and description **706** may be selected by operators and by instructions in shop order instances. In other illustrative examples, these operators may be, for example, designers, engineers, managers, installers, or other operators that may provide input for the dependency identified by dependency structure **700**.

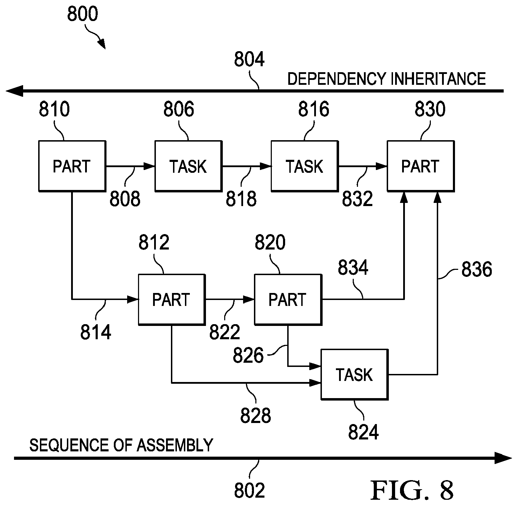

Turning now to **Figure 8**, an illustration of a graph of dependencies is depicted in accordance with an illustrative embodiment. In this illustrative example, the edges between tasks and parts in graph **800** are dependencies, such as dependencies **133** in **Figure 1**. In this illustration, the sequence of assembly is shown as going in the direction of arrow **802** over a period of time. Dependency inheritance for tasks and parts are in the direction of arrow **804**.

As depicted in graph **800**, task **806** has dependency **808** for part **810**; part **812** has dependency **814** for part **810**; task **816** has dependency **818** for task **806**; part **820** has dependency **822** for part **812**; and task **824** has dependency **826** for part **820** and dependency **828** for part **812**. Further, in this illustrative example, part **830** has dependency **832** for task **816**, dependency **834** for part **820**, and dependency **836** for task **824**.

Part **810**, part **812**, part **820**, and part **830** are examples of parts in parts **106** in **Figure 1**. Task **806**, task **816**, and task **824** are examples of tasks in tasks **118** in **Figure 1**. Dependency **808**, dependency **814**, dependency **818**, dependency **822**, dependency **826**, dependency **828**, dependency **832**, dependency **834**, and dependency **836** are examples of dependencies **133** in **Figure 1** that may be described using dependency structures **213** in **Figure 2**.

In these illustrative examples, graph **800** is based on parts **106**, tasks **118**, and dependencies **133**. Graph **800** may be created, modified, or created and modified by operators **122** in **Figure 1**.

Graph **800** may be also modified by instructions in shop order instances **132** in **Figure 1**. For example, an operator may add a number of parts, a number of tasks, and a number of dependencies to graph **800**. An operator may also modify a number of parts, a number of tasks, and number of dependencies in graph **800**. For example, an operator may remove a dependency in graph **800** that is no longer necessary for a performance of an assembly of an aircraft. As another example, an operator may add a new dependency that is necessary for a performance of an assembly of an aircraft. As still another example, instructions may be provided in shop order instances **132** in **Figure 1** to add and modify parts, tasks and dependencies in graph **800**.

In other illustrative examples, the sequence of assembly and dependencies for tasks and parts may go in different and additional directions in graph **800**. For example, other dependencies for task **806** may include a dependency for task **816** and a dependency for part **812**.

The illustration of the different components that may be used in manufacturing environment **100** in **Figures 1-8** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment. For example, although the illustrative examples are described with respect to an aircraft, an illustrative embodiment may be applied to other objects other than aircraft, such as, for example, without limitation, a vehicle, a submarine, a personnel carrier, a tank, a train, an automobile, a bus, a spacecraft, a surface ship, a spacecraft, a satellite, a rocket, an engine, a computer, harvesters, construction cranes, bulldozers, mining equipment, or other suitable types of objects.

In another illustrative example, a selection of section **304** with hotspot **306** may result in an inquiry being generated directly without using volume database **220**. For example, hotspot **306** may include a query for the volume corresponding to section **304**.

As another illustrative example, other information may also be present in dependency structure **700** in addition to rule **702**, graphical indicator **704**, and description **706**. For example, dependency structure **700** may also include a universal resource locator.

For example, a universal resource locator (URL) in an instance of dependency structure **700** may be a pointer to a document describing the dependency. The universal resource locator may be presented as a link to additional information. For example, the link may be shown when information about the instance of dependency structure **700** is presented in a graphical user interface. With this feature, an operator selecting the link as displayed in a graphical user interface results in the document pointed to by the universal resource locator being retrieved. The retrieved document may then be displayed, for example, in a window in the graphical user interface.

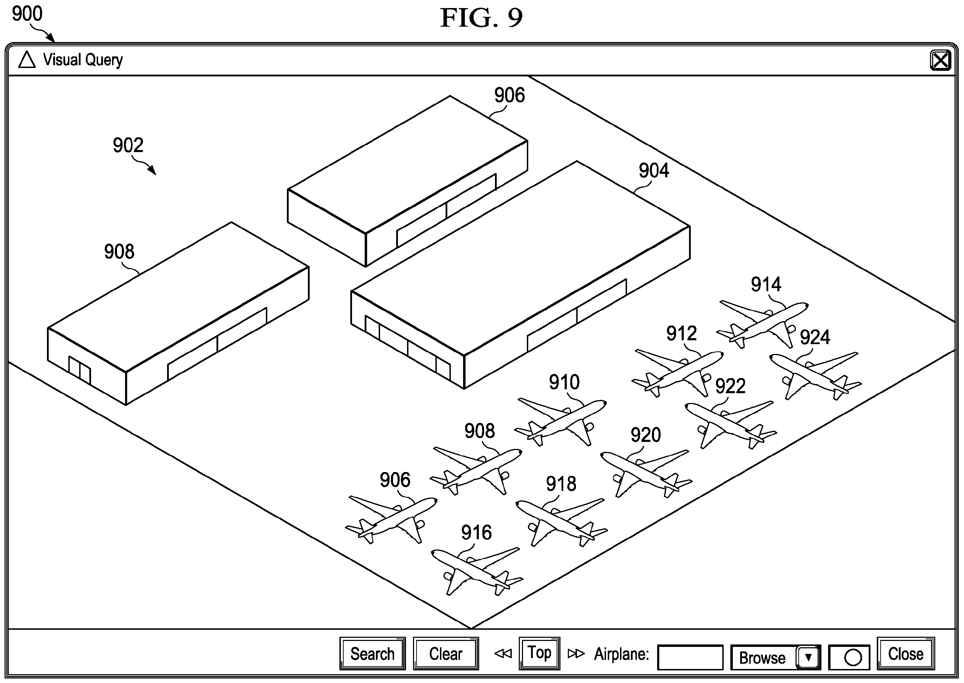

With reference now to **Figures 9-16**, illustrations of the display of graphical user interfaces for identifying the status of shop order instances are depicted in accordance with an illustrative embodiment. These figures illustrate one manner in which graphical user interface **207** in **Figure 2** may be implemented. The different graphical user interfaces may be displayed on a display system, such as display system **208** in **Figure 2**, and an operator may interact with the graphical user interfaces using an input system, such as input system **210** in **Figure 2**.

With reference to **Figure 9**, an illustration of a graphical user interface for viewing statuses of shop order instances is depicted in accordance with an illustrative embodiment. In this illustrative example, graphical user interface **900** displays buildings **902** including building **904**, building **906**, building **908**, aircraft **910**, aircraft **912**, aircraft **914**, aircraft **916**, aircraft **918**, aircraft **920**, aircraft **922**, and aircraft **924**.

In this particular example, each building in buildings **902** in graphical user interface **900** represents a location where manufacturing of aircraft occurs. Each building may correspond to a database of aircraft that are manufactured within the building. Each aircraft in graphical user interface **900** represents an aircraft that may be selected for examination. For example, each of these aircraft may represent a particular model of the aircraft that may be viewed. In other illustrative examples, the aircraft may represent an actual aircraft that has been completed.

In either case, selection of one of the aircraft may be used to view a model of the aircraft in a database. Selection of one of the aircraft may be used to begin a search for parts that are serial number controlled in the illustrative example.

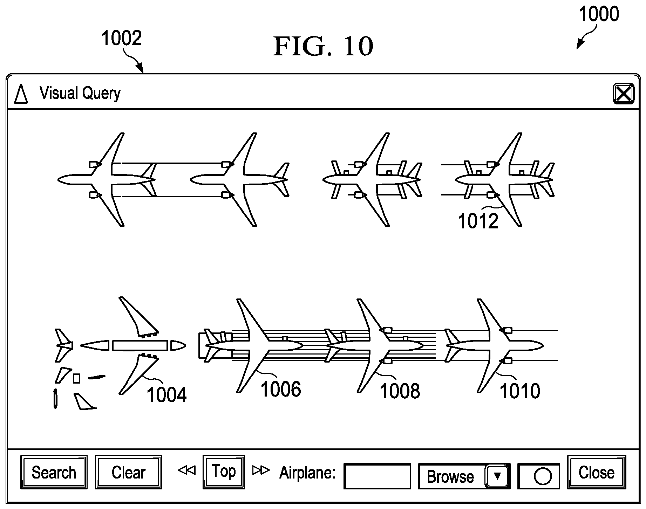

Turning now to **Figure 10**, an illustration of aircraft positions in a building is depicted in accordance with an illustrative embodiment. In this illustrative example, aircraft positions **1000** are displayed in graphical user interface **1002**. In this example, graphical user interface **1002** may be displayed when one of the buildings is selected from graphical user interface **900** in **Figure 9**. These positions correspond to tasks that may be performed at different stages of the assembly of an aircraft.

In this particular example, aircraft positions **1000** include position **1004**, position **1006**, position **1008**, position **1010**, and position **1012**. In these illustrative examples, certain tasks are performed in different positions in aircraft positions **1000**. In other words, the aircraft assembly progresses from position to position with different parts being added to the aircraft at the different positions in aircraft positions **1000**.

A selection of one of these positions results in identifying graphical representations for parts that would be installed at a particular position as well as any parts that may have been installed from a prior position. As a result, parts that are not to be installed into a subsequent position are not present. For example, an aircraft in position **1012** is a fully configured aircraft. An aircraft in position **1010** may not have seats and carpet. An aircraft in position **1008** may not include stove ends, lavatories, galleys, and other parts. These different positions in aircraft positions **1000** may have different conditions of assembly for the aircraft in these illustrative examples.

In these illustrative examples, each of these positions may have models associated with the position. These models may contain the parts that are present in the aircraft for a particular position. As a result, a selection of a position results in a selection of models that may be used to display graphical representations of parts. As a result, models for positions with fewer parts may be queried more quickly to identify information to generate graphical representations of parts for the aircraft.

Additionally, in these illustrative examples, shop order instances in a shop order database may be identified for each of the positions. In other words, each position may have a shop order database containing shop order instances that may be generated for those particular positions. As a result, positions with fewer parts have fewer shop order instances to monitor or manage. In this manner, faster query of a shop order database for a particular position may be made when that database is for a position with fewer parts. After the selection of the position, an operator may select a section of aircraft for review.

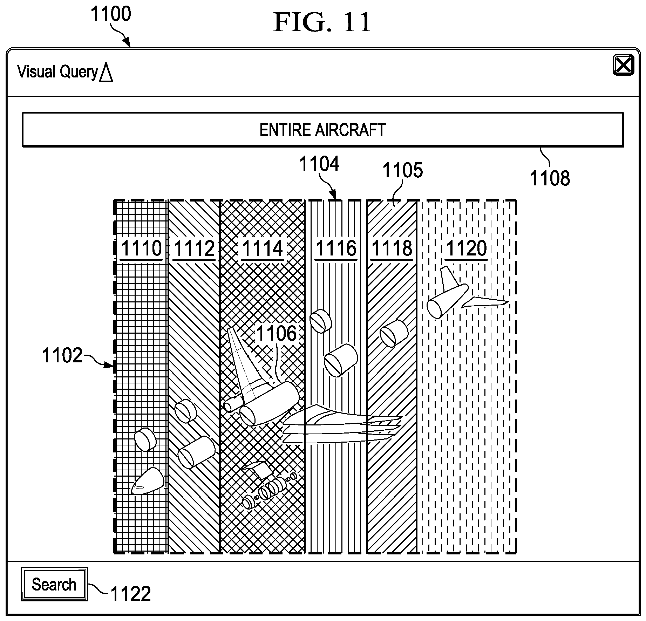

Turning now to **Figure 11**, an illustration of a graphical user interface of aircraft sections is depicted in accordance with an illustrative embodiment. In this illustrative example, graphical user interface **1100** displays sections **1102** for an aircraft in area **1104** of graphical user interface **1100**. In this illustrative example, graphical user interface **1100** may be displayed in response to a selection of a position from aircraft positions **1000** in graphical user interface **1002** in **Figure 10**. Graphical user interface **1100** also may be displayed in response to a selection of an aircraft in graphical user interface **1100** in **Figure 11**.

As depicted, sectional view **1105** is displayed in area **1104** of graphical user interface **1100**. Sectional view **1105** is an example of one implementation for sectional view **223** shown in block form in **Figure 2** and **Figure 5**. In this particular example, sectional view **1105** may be for an aircraft in position **1012** in **Figure 10**.

An operator may select a section from sections **1102**. As depicted, sections **1102** are examples of sections **300** in **Figure 3** as displayed in graphical user interface **1100**. Sections **1102** are selectable in this particular example. In other words, sections **1102** may include hotspots. These hotspots are not seen in this illustrative example. Hotspots are areas in graphical user interface **1100** that may be selected to cause an action. In these illustrative examples, these hotspots correspond to sections **1102**. The hotspots may encompass sections **1102** or may be around sections **1102** or some combination thereof.

As another example, section **1106** is an example of a section in sections **1102** that may be selected. A selection of this section results in a more detailed illustration of section **1106** being displayed. In this example, section **1106** is an upper barrel portion of an aircraft.

Additionally, an identification of the parts present in the section is also made in response to the user selection of a particular section. This identification may include any parts that are present for the particular position of the aircraft in that section. In other words, the same section of an aircraft in different positions may have different parts that are present based on tasks for installing parts. This identification may be made through the use of states **226** in **Figure 2**.

In the illustrative example, an operator may select to view the entire aircraft by selecting entire aircraft in area **1108** in graphical user interface **1100**. In other words, the volume for display may be the entire aircraft. Further, an operator may select groups of sections **1102**. As depicted, the selection may be made by selecting one of area **1110**, area **1112**, area **1114**, area **1116**, area **1118**, and area **1120** in graphical user interface **1100**. In these illustrative examples, these areas have hotspots. In this manner, an operator may view different portions of an aircraft in a manner that suits the particular query that the operator desires.

In this illustrative example, other types of queries may be made through graphical user interface **1100**. For example, search button **1122** may be used to initiate a search for a particular shop order instance. This search may be performed to provide visualizations of an assembly associated with the particular shop order instance.

In the illustrative example, the search also may be performed for parts that are serial number controlled parts. In this manner, a search may be made to provide visualizations of the locations of serial number controlled parts. This visualization enables and may make locating a serial number controlled part in an aircraft for an inspection to identify a serial number or verify a serial number easier for an operator as compared to currently available systems.

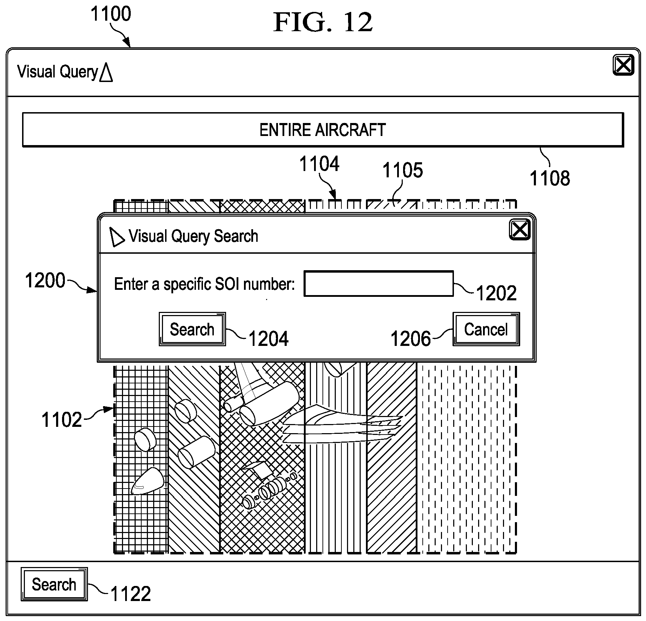

With reference now to **Figure 12**, an illustration of a graphical user interface for querying a shop order instance is depicted in accordance with an illustrative embodiment. In this depicted example, the selection of search button **1122** results in window **1200** being displayed in graphical user interface **1100**.

Window **1200** may be used to perform a visual search in this illustrative example. As depicted, a shop order instance identifier may be entered into field **1202** in window **1200**. Pressing search button **1204** results in initiating a search for the shop order instance identifier that is entered. Selection of cancel button **1206** cancels the search in this illustrative example.

The search may be performed to identify whether any of the parts in a shop order instance include serial number controlled parts. For example, a task may include assembling parts for an assembly that includes one or more parts that are serial number controlled. As another example, the task may be to identify serial numbers or verify serial numbers for serial number controlled parts that have been assembled into an assembly.

The illustration of graphical user interface **900** with buildings **902** in **Figure 9**, graphical user interface **1002** with aircraft positions **1000** in **Figure 10**, graphical user interface **1100** in **Figure 11** and **Figure 12** are examples of multilevel querying that may be performed in accordance with an illustrative embodiment. As depicted, the selection of a building from buildings **902** may select a particular model for an aircraft. The particular model may be displayed with positions using graphical user interface **1002**. The selection of a position may result in another view being displayed with sections **1102** in graphical user interface **1100**. In this manner, an operator may more easily traverse models of different aircraft, depending on the position selected.

In addition to the multilevel querying, graphical user interface **1100** in **Figure 11** also provides an interface to visualize an assembly for a shop order instance. As described above, window **1200** is configured to receive the identification of a shop order instance. With this identification, a visualization of an assembly for the shop order instance may be displayed as described below.

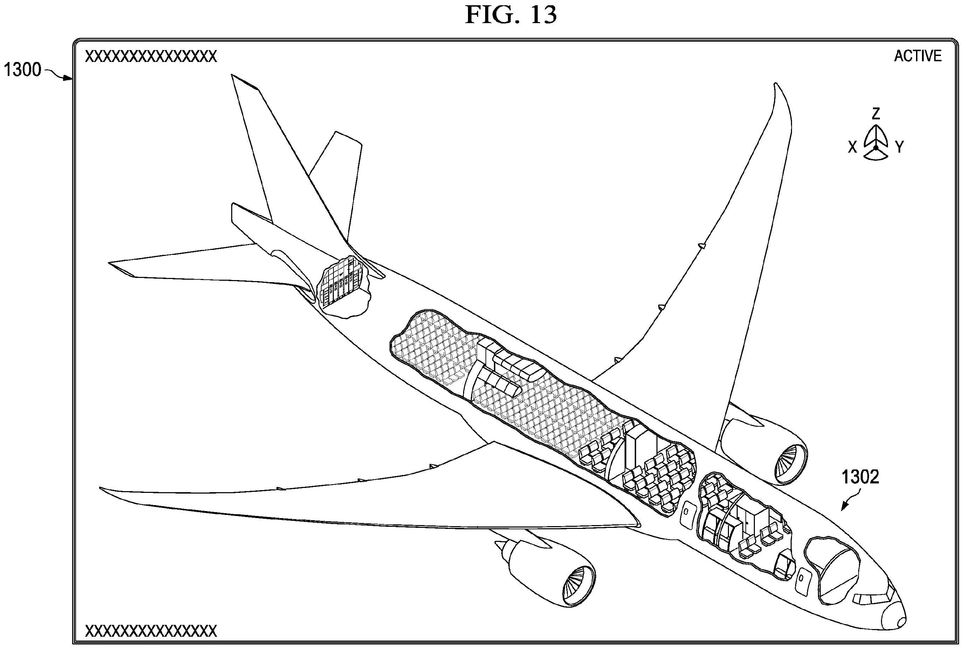

Turning now to **Figure 13**, an illustration of a graphical user interface showing serial number controlled parts is depicted in accordance with an illustrative embodiment. In this illustrative example, graphical user interface **1300** illustrates serial number controlled parts **1302** for a volume that includes the entire aircraft. As depicted, serial number controlled parts **1300** are displayed without context with other parts that are not serial number controlled in this illustrative example.

In these illustrative examples, graphical indicators may be displayed in graphical user interface **1300**. These graphical indicators may be, for example, colors that indicate a status of shop order instances for the assemblies of serial number controlled parts in the aircraft. For example, the colors may be green, red, and yellow. As depicted, green indicates that the assembly is completed, yellow indicates that the assembly is in progress, and red indicates that the assembly of the parts has not been started.

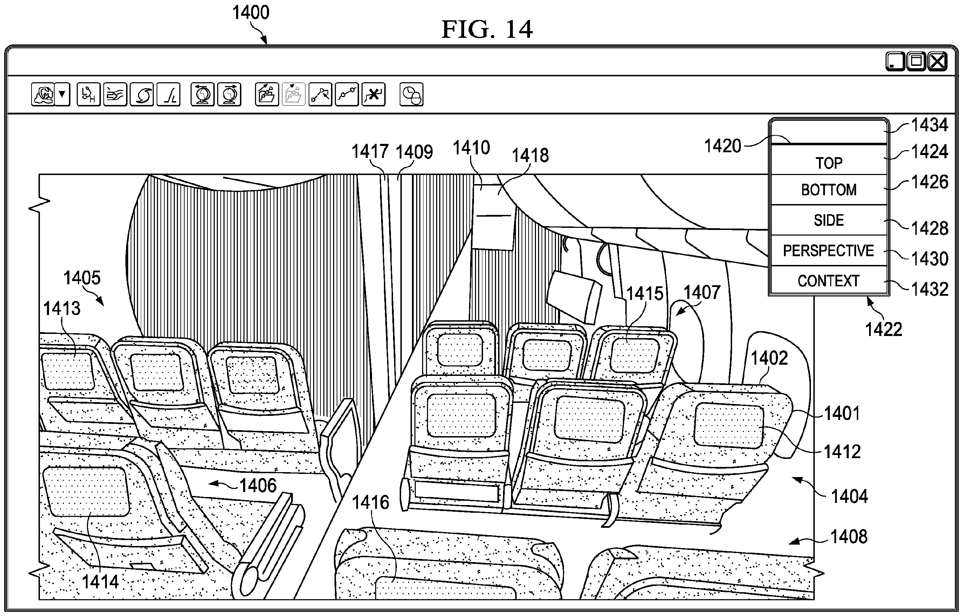

In **Figure 14**, an illustration of a graphical user interface with a visual representation from the shop order instance is depicted in accordance with an illustrative embodiment. In this depicted example, graphical user interface **1400** displays a view of a volume. This volume includes a graphical representation of parts **1401** in assembly **1402.** In this illustrative example, assembly **1402** takes the form of row of seats **1404**.

Further, other assemblies are displayed in the volume in graphical user interface **1400**. For example, row of seats **1405**, row of seats **1406**, row of seats **1407**, row of seats **1408**, storage closet **1409**, and lavatory **1410** in this particular volume are displayed for assembly **1402** in graphical user interface **1400**.

In addition, graphical indicator **1412** may be displayed in association with assembly **1402** to indicate the status of this shop order instance. In this illustrative example, graphical indicator **1413** is displayed in association with row of seats **1405**, graphical indicator **1414** is displayed in association with row of seats **1406**, graphical indicator **1415** is displayed in association with row of seats **1407**, graphical indicator **1416** is displayed in association with row of seats **1408**, graphical indicator **1417** is displayed in association with storage closet **1409**, and graphical indicator **1418** is displayed in association with lavatory **1410**. These graphical indicators also may indicate a status of shop order instances for the assembly displayed to provide a visual context for assembly **1402**.

In this manner, an operator viewing the shop order instance for assembly **1402** may see the assembly of parts **1401** visually in context with other assemblies as shown visually in graphical user interface **1400**. This visual context may provide a visualization for instructions in the shop order instance for assembling assembly **1402**. Further, when graphical indicators are provided that indicate the status of shop order instances, an operator may gain additional information about the context of the particular assembly of interest in a shop order instance with respect to other assemblies.

In this particular example, the assemblies displayed in graphical user interface **1400** are assemblies present for a particular state in states **226**. For example, the state may be for a particular state at a selected position in positions **114** where the task for a shop order instance is to be performed. In another example, assemblies displayed may be for some other state that has already occurred or one that is planned for the aircraft. Additionally, in graphical user interface **1400**, an operator is able to traverse different parts of the volume displayed to view and examine assembly **1402** as well as other assemblies in the volume displayed.

For example, an operator may select a graphical representation in the graphical representations for assembly **1402.** The selection of the graphical representation for assembly **1402** may provide a closer view of assembly **1402**.

In another illustrative example, the graphical representations of the different assemblies in the volume displayed in graphical user interface **1400** may be traversed using commands **1420** displayed in menu **1422**. In this illustrative example, commands **1420** include top **1424**, bottom **1426**, side **1428**, perspective **1430**, and context **1432**.

In this illustrative example, context **1432** may allow for the display of assembly **1402** to be in the context of other assemblies or without the context of other assemblies. In other words, only assembly **1402** may be displayed without the other parts present.

Of course, these commands for different views are only examples and not meant to encompass all the different types of commands that may be used to view graphical representations of particular parts. For example, commands such as zoom, pan, and other suitable commands also may be present in addition to or in place of the ones depicted in this illustrative example.

Additionally, in some cases, a part identifier may be entered into part field **1434**. By entering a part identifier, different views of a particular part may be seen by the operator. Additionally, the operator may also select a command for commands **1420** to provide a particular view of the part.

Of course, other processes may be used to traverse and view graphical representations of parts **1401** in assembly **1402** as well as parts for other assemblies. These types of processes may include those typically used with computer-aided design software and other types of software in which graphical representations of parts may be viewed and traversed.

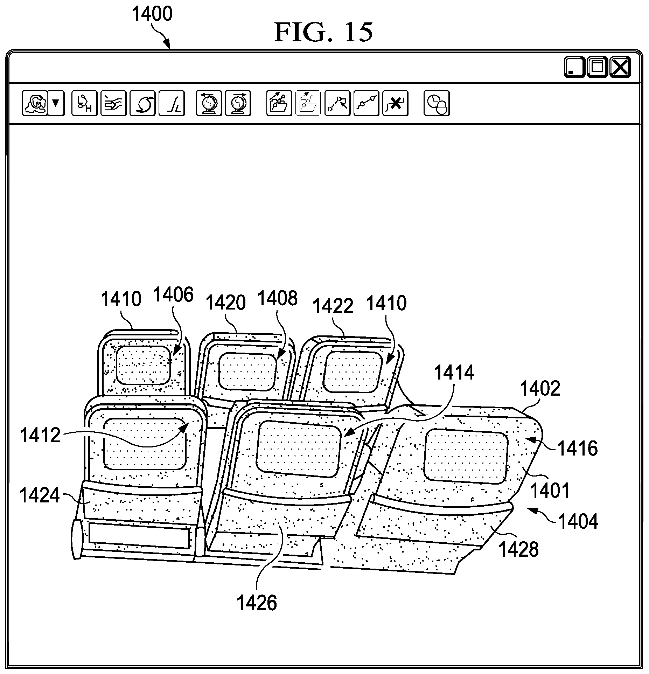

Turning next to **Figure 15**, an illustration of a display of shop order instance information is depicted in accordance with an illustrative embodiment. As depicted, graphical user interface **1400** only displays graphical representations of parts **1401** for assembly **1402**. The graphical representations for other assemblies are not shown in this view. In this manner, an operator may visualize parts **1401** for assembly **1402** alone without other assemblies potentially obscuring the examination of assembly **1402**.

Further in this example, graphical indicator **1412**, graphical indicator **1413**, graphical indicator **1414**, graphical indicator **1415**, and graphical indicator **1416**, are displayed to indicate that row of seats **1404**, row of seats **1405**, row of seats **1406**, row of seats **1407**, and row of seats **1408**, are serial number controlled parts in this illustrative example.

As depicted, these graphical indicators take the form of triangular icons. Of course, other types of graphical indicators may be used depending on the particular implementation. In some illustrative examples, graphical indicators may not be needed if the serial number controlled parts are not displayed with other parts that are not serial number controlled.

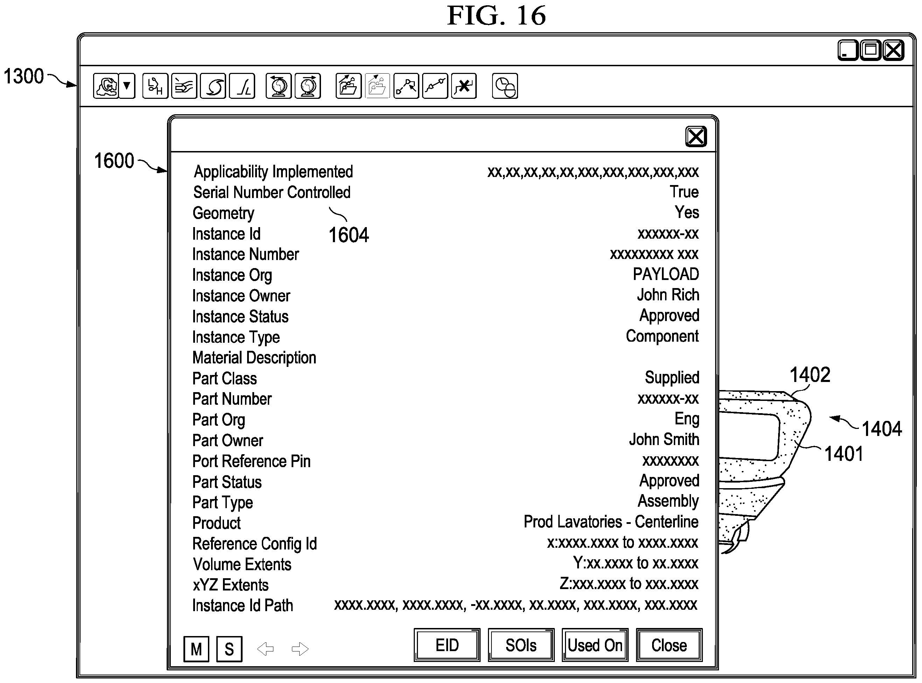

With reference next to **Figure 16**, another illustration of a display of shop order instance information is depicted in accordance with an illustrative embodiment. In this illustrative example, window **1600** is displayed within graphical user interface **1400** when the graphical representation of assembly **1402** is selected. Window **1600** displays information about the shop order instance for assembly **1402**. This information may be obtained from shop order instance **500** as illustrated in **Figure 5** as well as other sources depending on the particular implementation.

As depicted in this illustrative example, line **1604** indicates whether a part, the seat in assembly **1402**, is a serial number controlled part. In this example, assembly **1402** contains a serial number controlled part as indicated by line **1604**. In the illustrative example, a serial number controlled part does not include an assembly of parts. Serial number controlled parts may be part of an assembly. For example, a row of seats may be indicated as being true for a serial number controlled part. The number of seats may be two seats, three seats of some other number of seats. These seats are assemblies. The parts of the seats that are actually serial number controlled are the life vests in the seats.

The illustrations of the different graphical user interfaces in **Figures 9-16** are provided only as examples of some implementations for graphical user interface **207** in **Figure 2**. These examples are not meant to limit the manner in which an illustrative embodiment may be implemented. For example, although the different examples are displayed with reference to aircraft, similar displays may be used for other types of vehicles or objects. For example, the graphical user interfaces may be configured for sections of objects such as an automobile, a ship, a satellite, an engine, or some other suitable type of object.

As another illustrative example, the display of the different graphical user interfaces may be performed using other graphical user interfaces in addition to or in place of the ones depicted. Further, the order of the graphical user interfaces may vary from the order described above.

As another illustrative example, the display of the different graphical user interfaces may be performed using other graphical user interfaces in addition to or in place of the ones depicted. Further, the order of the graphical user interfaces may vary from the order described above.

In one illustrative example, the identification of the shop order instance may be performed with window **1200** as the graphical user interface instead of graphical user interface **1100** as depicted in the illustrative example. Of course, window **1200** may be displayed with other graphical user interfaces in addition to or in place of graphical user interface **1100**.

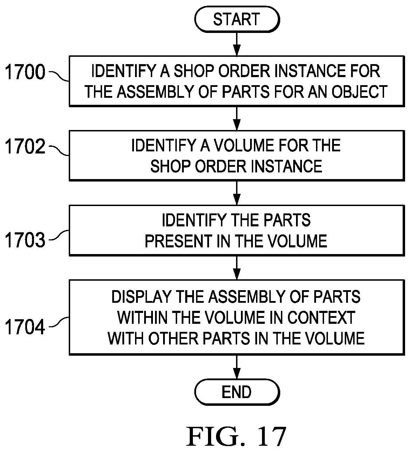

With reference next to **Figure 17**, an illustration of a flowchart of a process for visualizing an assembly of parts is depicted in accordance with an illustrative embodiment. The process illustrated in **Figure 17** may be implemented in manufacturing environment **100** in **Figure 1**. In particular, one or more of the different operations illustrated may be implemented using object manager **124** in **Figure 1**.

The process begins by identifying a shop order instance for the assembly of parts for an object (operation **1700**). The identification of the shop order instance may be received in a number of different ways. For example, the identification may be received through user input by an operator to a graphical user interface. One example of how this input may be received is through the use of window **1200** in graphical user interface **1100** in **Figure 12**. Of course, this identification of the shop order instance may be made other ways. For example, a list of shop order instances may be displayed and user input may select one of the shop order instances. These other mechanisms for identifying a particular shop order instance may be employed in accordance with an illustrative embodiment.

The process then identifies a volume for the shop order instance (operation **1702**). Next, the process identifies the parts present in the volume (operation **1703**). These parts include parts for the assembly. These parts also may include parts for other assemblies that are in the volume. The process displays the assembly of parts within the volume in context with other parts in the volume (operation **1704**), with the process terminating thereafter.

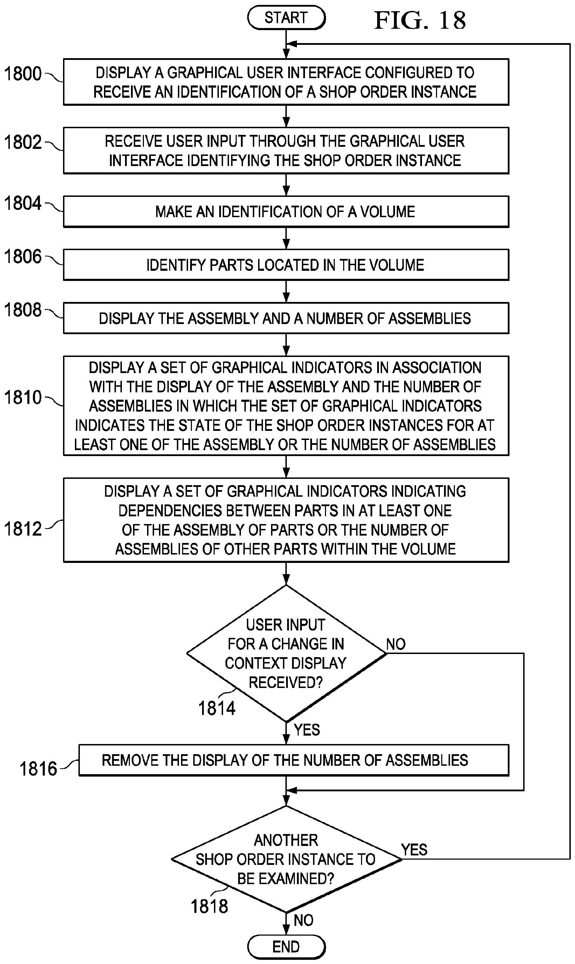

With reference next to **Figure 18**, an illustration of a more detailed flowchart of a process for visually displaying an assembly is depicted in accordance with an illustrative embodiment. The process illustrated in **Figure 18** may be implemented in manufacturing environment **100** in **Figure 1**. In particular, one or more of the different operations illustrated may be implemented using object manager **124** in **Figure 1**.

The process begins by displaying a graphical user interface configured to receive an identification of a shop order instance (operation **1800**). The process receives user input through the graphical user interface identifying the shop order instance (operation **1802**).

Next, an identification of a volume is made (operation **1804**). The volume may be identified in a number of different ways. In one illustrative example, the volume is based on at least one of a section in which the assembly is located, a selected distance from the assembly, or based on some other rule or selection process.

For example, the volume may be identified from a volume database that identifies volumes for assemblies. This database may be, for example, volume database **220** in **Figure 2**. In other illustrative examples, the volume may be a volume based on a section in which the assembly is located. In still other illustrative examples, the volume may be identified based on some selected distance from the location of the assembly in the shop order instance. In this case, the volume may not be located in a database when the shop order instance containing the assembly is identified.

Parts located in the volume are identified (operation **1806**). These parts are for the assembly that is present in the volume. The assembly includes assembly for the shop order instance and other assemblies that may be located in the volume with the assembly for the shop order instance. These parts may be parts present in the volume for a current state of assembly, for example, when the aircraft is on an assembly line. Of course, parts may be for some other state depending on the particular implementation.

The process then displays the assembly and a number of assemblies (operation **1808**). The display of the assembly and the number of assemblies is performed by displaying graphical representations of the assemblies in the graphical user interface. This display provides a visual context of other assemblies relative to the assembly in the shop order instance.

Next, a set of graphical indicators are displayed in association with the display of the assembly and the number of assemblies in which the set of graphical indicators indicates the state of the shop order instances for at least one of the assembly or the number of assemblies (operation **1810**). These graphical indicators may be associated with the assembly, parts in the assembly, or some combination thereof. The process also displays a set of graphical indicators indicating dependencies between parts in at least one of the assembly of parts or the number of assemblies of other parts within the volume (operation **1812**).

A determination is then made as to whether the user input for a change in context display has been received (operation **1814**). This change in context display may be performed to the selection of a command such as context **1432** in menu **1422** in **Figure 14**.

If user input for a change in context has been received, the process removes the display of the number of assemblies (operation **1816**). In this manner, the operator may view only the assembly for the shop order instance. Further, the operator may then traverse this view to obtain more information if desired.

The process then determines whether another shop order instance is to be examined (operation **1818**). The process also proceeds to operation **1818** if user input has not been received for a change in the context. If another shop order instance is to be examined, the process returns to operation **1800**. Otherwise, the process terminates.

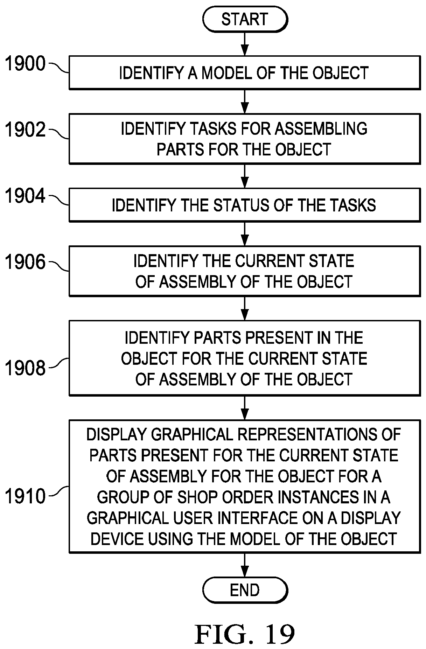

With reference now to **Figure 19**, an illustration of a flowchart of a process for identifying the status of tasks is depicted in accordance with an illustrative embodiment. The process illustrated in **Figure 19** may be implemented in manufacturing environment **100** in **Figure 1**. In particular, one or more of the different operations illustrated may be implemented using object manager **124** in **Figure 1**.

The process begins by identifying a model of the object (operation **1900**). The process then identifies tasks for assembling parts for the object (operation **1902**). The process identifies the status of the tasks (operation **1904**).

Next, the process identifies the current state of assembly of the object (operation **1906**). The process then identifies parts present in the object for the current state of assembly of the object (operation **1908**). The process then displays graphical representations of parts present for the current state of assembly for the object for a group of shop order instances in a graphical user interface on a display device using the model of the object (operation **1910**), with the process terminating thereafter. The set of graphical indicators indicates a status of a portion of the tasks for the parts displayed using the graphical representations. In addition, in this illustrative example, only parts present for the current state of assembly of the object are displayed. In other words, only parts that are present are shown and graphical indicators may be displayed in association with those parts to indicate a status of tasks performed such as those in shop order instances.

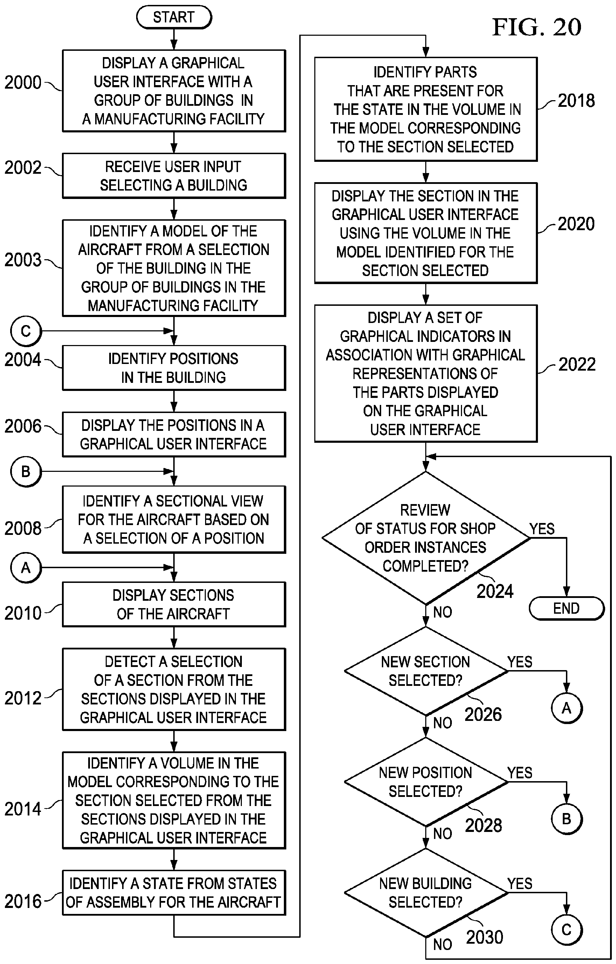

Turning now to **Figure 20**, an illustration of a flowchart of a process for identifying the status of shop order instances is depicted in accordance with an illustrative embodiment. This process is an example of one manner in which the assignment of tasks through shop order instances may be managed. In particular, dedication of a status of different tasks in shop order instances may be identified in accordance with an illustrative embodiment. The different operations illustrated in **Figure 20** may be implemented using status identifier **206** in **Figure 2****.**

The process begins by displaying a graphical user interface with a group of buildings in a manufacturing facility (operation **2000**). The graphical user interface includes hotspots for the buildings that can be selected. A hotspot is a portion of the graphical user interface that may be selected to cause an action. In these illustrative examples, the buildings are hotspots that may be selected by an operator.

The process then receives user input selecting a building (operation **2002**). In the illustrative example, each building may be used to assemble a particular aircraft. The particular aircraft may be a particular type of aircraft such as the model. In some cases, more than one building may be used to assemble the same type of aircraft but the particular aircraft may be a specific build for a customer with specific options. In other words, different aircraft of the same type may be assembled in different buildings that have different options although they are of the same type.

Next, a model of the aircraft is identified from a selection of the building in the group of buildings in the manufacturing facility (operation **2003**). Positions in the building are identified (operation **2004**). Each building may have different positions for the aircraft that are being assembled. Further, even if a building has the same positions, the status of an aircraft at a particular building at particular positions may be different from other buildings. Further, even with the same positions, different aircraft may be assembled in the positions in different buildings.

The positions are displayed in a graphical user interface (operation **2006**). In these illustrative examples, the different positions are hotspots that may be selected through user input entered by an operator. The process then receives user input for selecting a position.

The process then identifies a sectional view for the aircraft based on a selection of a position (operation **2008**). In the illustrative example, each position may have a different sectional view that may be displayed. The sections of an aircraft in a position are the sections manufactured at the position selected in these illustrative examples. The sectional view includes sections for that particular position.

As depicted, the sectional view may be, for example, sectional view **223** in sectional views **224** as shown in **Figure 2**. Different sectional views are present for different positions in this illustrative example. Sectional view **1105** in **Figure 11** is an example of a sectional view that may be selected depending on the position selected for the aircraft in operation **2008**.

In these illustrative examples, the sectional views were selected for parts that are present in the aircraft for the position. These are parts that may already be present from assembly of the aircraft in a prior position or may be parts that are to be assembled in the position selected.

The process then displays sections of the aircraft (operation **2010**). In operation **2010**, the sections are displayed in the sectional view of the aircraft. Further, the different sections are displayed in association with hotspots that may be selected by user input entered by an operator. The process then detects a selection of a section from the sections displayed in the graphical user interface (operation **2012**). In operation **2012,** the section has hotspots associated with the volume identifier. The selection of a section of an aircraft involves selecting the hotspot associated with the aircraft. The hotspot points to a volume identifier, such as volume identifier **222** in **Figure 2****.** In some cases, the hotspot may be a link pointing to the volume identifier. For example, the hotspot may be an index used to identify a volume identifier.

The process then identifies a volume in the model corresponding to the section selected from the sections displayed in the graphical user interface (operation **2014**). In these illustrative examples, each section of an aircraft is associated with the volume for the aircraft. This volume is identified from volume identifiers associated with sections in the sectional view using the volume identifier pointed to by the hotspot selected for the section. The volume identifier may include information defining the volume. For example, volume identifier **222** may include volume descriptor **402** as depicted in **Figure 4****.** In particular, the identifier may include a group of coordinates defining the volume in the model.

Next, the process identifies a state from states of assembly for the aircraft (operation **2016**). In these illustrative examples, the state of assembly may be a condition of assembly based on the position of the aircraft within a manufacturing facility. The process then identifies parts that are present for the state in the volume in the model corresponding to the section selected (operation **2018**). These parts that are present are ones that are present for a particular state for the aircraft. In this illustrative example, the parts may be those present for a current state of assembly of the aircraft. With the parts for the current state of assembly, visualizing information about shop order instances may be easier.

The process then displays the section in the graphical user interface using the volume in the model identified for the section selected (operation **2020**). In these illustrative examples, the parts are displayed as graphical representations rather than a list of parts. In this illustrative example, the graphical representations are for parts that are present for the state selected from the state of assembly. In particular, the state of assembly may be the current state of assembly for the object at its current position on the assembly line. Of course, in other illustrative examples, other states, past or present, may be used to perform an analysis of shop order instances that have been performed or may be performed. Further, the display of the parts in the display may be manipulated by the operator to view the parts of different perspectives and different identifications.

The process then displays a set of graphical indicators in association with graphical representations of the parts displayed on the graphical user interface (operation **2022**). In this illustrative example, the graphical indicators take the form of colors used to display the graphical representations of the parts. For example, the colors may comprise at least one of red indicating that work for a part on a shop order instance is available, green indicating that the work for the part on the shop order instance is completed, yellow indicating that the work for the part on the shop order instance is in progress, or grey indicating that the work for the part is unassigned to the shop order instance.

A determination is made as to whether the review of status for shop order instances has been completed (operation **2024**). If the review has been completed, the process terminates.

Otherwise, a determination is made as to whether a new section of the aircraft has been selected for the position of the aircraft (operation **2026**). If any section has been selected, the process then returns to operation **2010** as described above.

If a new section has not been selected, a determination is made as to whether a new position has been selected for the aircraft (operation **2028**). If a new position has been selected, the process then returns to operation **2008** as described above. If a new position has not been selected, the process determines whether a new building has been selected (operation **2030**). If a new building has been selected, the process returns to operation **2004.** Otherwise, the process returns to operation **2024.**

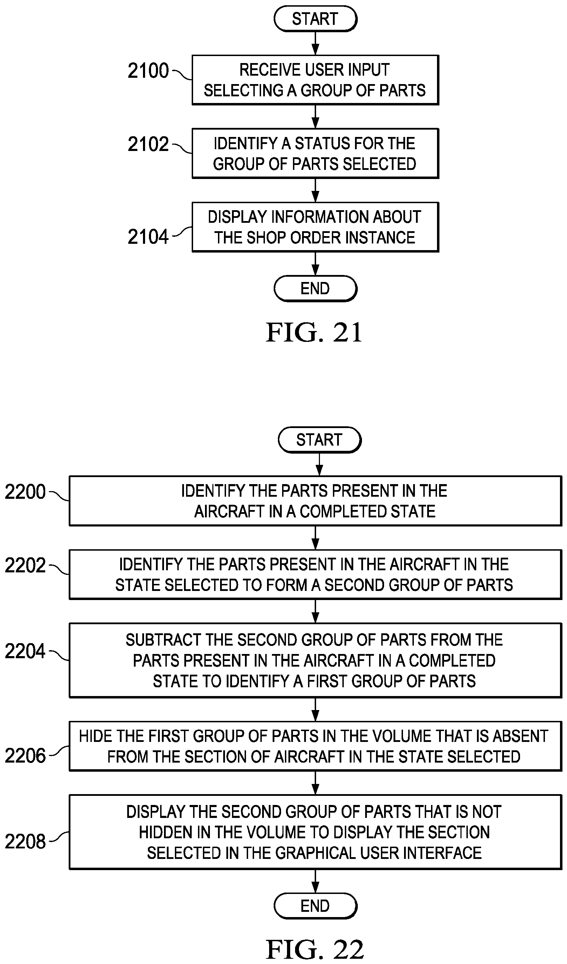

Turning now to **Figure 21**, an illustration of a flowchart of a process for identifying information about the status of a shop order instance is depicted in accordance with an illustrative embodiment. The process illustrated in **Figure 21** may be implemented using status identifier **206** in **Figure 2****.**

The process begins by receiving user input selecting a group of parts (operation **2100**). In operation **2100**, the user input making the selection of the group of parts may be selected from one of a selection of the group of parts from a list of the parts and a selection of the group of parts from a display of the graphical representation of the parts in the graphical user interface.

The process then identifies a status for the group of parts selected (operation **2102**). The status may be made by querying a shop order database containing shop order instances. The database may be one specific for a particular section when these operations are implemented with operations in **Figure 20**. In another case, the database may be shop order instances for an entire aircraft depending on the particular implementation.

The process then displays information about the shop order instance (operation **2104**), with the process terminating thereafter. This information may be displayed in the graphical user interface in association with the graphical representation of the group of parts selected through the user input. For example, information may be displayed in a window near or on top of the graphical representation of the group of parts selected. The information displayed may be information such as illustrated for shop order instance **500** in **Figure 5****.**

This process may be repeated any number of times for different parts selected from the graphical representations of those parts in a graphical user interface. In this manner, an operator may more easily identify shop order instances in a status of the shop order instances for particular portions of an aircraft that may be of interest to the operator.

Turning now to **Figure 22**, an illustration of a flowchart of a process for displaying a section in a graphical user interface is depicted in accordance with an illustrative embodiment. The different operations illustrated in **Figure 22** are examples of an implementation for operation **2020** in **Figure 20****.**

The process identifies the parts present in the aircraft in a completed state (operation **2200**). Thereafter, the process identifies the parts present in the aircraft in the state selected to form a second group of parts (operation **2202**). The second group of parts is subtracted from the parts present in the aircraft in a completed state to identify a first group of parts (operation **2204**).

The process hides the first group of parts in the volume that is absent from the section of aircraft in the state selected (operation **2206**). The second group of parts that is not hidden in the volume is displayed to display the section selected in the graphical user interface (operation **2208**), with the process terminating thereafter.

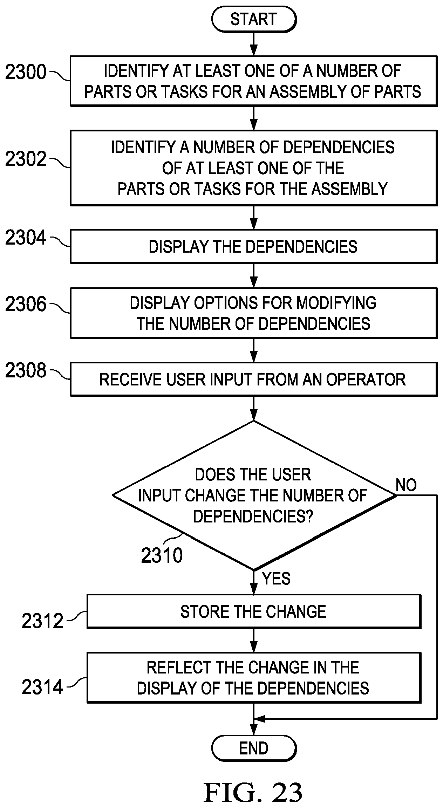

With reference now to **Figure 23**, an illustration of a flowchart of a process for managing dependencies for at least one of a number of parts or a number of tasks in an aircraft is depicted in accordance with an illustrative embodiment. The process illustrated in **Figure 23** may be implemented in manufacturing environment **100** in **Figure 1****.** In particular, one or more of the different operations illustrated may be implemented using object manager **124** in **Figure 1****.** This process may be implemented to manage dependency structures **213** in **Figure 2** for performing tasks **118** as assigned using shop order instances **132** in **Figure 1****.**

The process begins by identifying at least one of a number of parts or tasks for an assembly of parts (operation **2300**). The process then identifies a number of dependencies of at least one of the parts or the tasks for the assembly (operation **2302**). The dependencies are displayed (operation **2304**). The display of the dependencies may take various forms. For example, a dependency chart that is similar to the dependency illustrated in graph **800** in **Figure 8** may be used.

The process displays options for modifying the number of dependencies (operation **2306**). The process then receives user input from an operator (operation **2308**). Next, a determination is made as to whether the user input changes the number of dependencies (operation **2310**).

If a change is made to the number of dependencies, the process then stores the change (operation **2312**). The change to the number of dependencies may include new dependencies, removed dependencies, and modified dependencies.

The change is reflected in the display of dependencies (operation **2314**), with the process terminating thereafter. With reference again to operation **2310**, if the user input does not change the dependencies, the process also terminates.

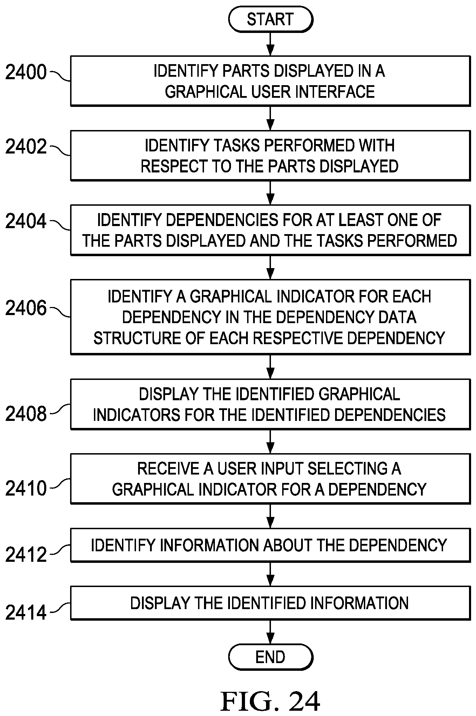

With reference now to **Figure 24**, an illustration of a flowchart of a process for displaying graphical indicators of dependencies is depicted in accordance with an illustrative embodiment. The process illustrated in **Figure 24** may be implemented in manufacturing environment **100** in **Figure 1****.** In particular, one or more of the different operations illustrated may be implemented using object manager **124** in **Figure 1****.**

In this illustrative example, the different operations in **Figure 24** may be implemented to show dependencies between parts in an assembly for a shop order instance. Further, the different operations also may be used to show dependencies between different assemblies. The dependencies may be displayed during the display of an assembly in the context of other assemblies such as described in **Figure 17** and in **Figure 18****.**

The process begins by identifying parts displayed in a graphical user interface (operation **2400**). The process also identifies tasks performed with respect to the parts displayed (operation **2402**). The process further identifies dependencies for at least one of the parts displayed or the tasks performed (operation **2404**). In these illustrative examples, each dependency is defined by a dependency data structure.

The process still further identifies a graphical indicator for each dependency in the dependency data structure of each respective dependency (operation **2406**). The process then displays the identified graphical indicators for the identified dependencies (operation **2408**). In this illustrated process, the dependency data structure of each respective dependency is an example of dependency structure **700** in **Figure 7****.** The graphical indicator for each dependency is an example of graphical indicator **704** in **Figure 7****.**

Next, the process receives a user input selecting a graphical indicator for a dependency (operation **2410**). The process identifies information about the dependency (operation **2412).** The process then displays the identified information (operation **2414**), with the process terminating thereafter. In this illustrated process, the identified information for the dependency includes description **706** in **Figure 7****.** The identified information may also include rule **702** in **Figure 7** and a status for whether the dependency has been met.

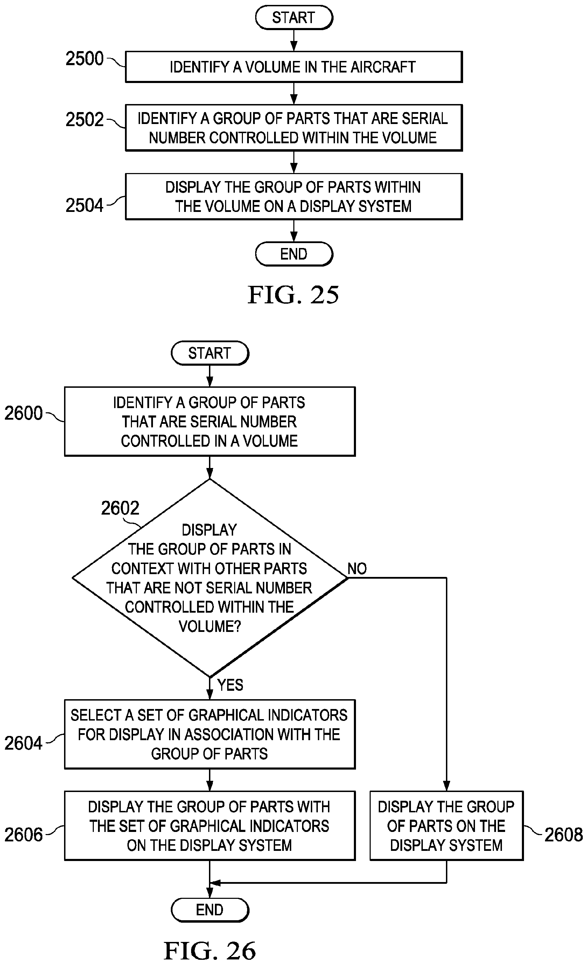

Turning now to **Figure 25**, an illustration of a flowchart of process for visualizing a group of parts in an aircraft is depicted in accordance with an illustrative embodiment. In this depicted example, the process illustrated in **Figure 25** is a process for visualizing parts that are serial number controlled parts. The process illustrated in **Figure 25** may be implemented in object manager **124** in **Figure 1****.** In particular, one or more operations may be implemented using at least one of status identifier **206** or object visualizer **204** in object manager **124** in **Figure 2****.**

The process begins by identifying a volume in the aircraft (operation **2500**). In operation **2500**, the volume may be identified any number of different ways. For example, the volume may be identified from user input selecting a portion of an aircraft from sections of the aircraft displayed on a graphical user interface, such as graphical user interface **1002** in **Figure 10****.**

In another example, the part may be selected by receiving user input selecting the group of parts from a list of parts. In yet another example, the volume may be identified based on the selection of a shop order instance. The shop order instance contains the group of parts from which the volume may be identified to encompass the group of parts. This group of parts may form an assembly in this illustrative example.

Next, the process identifies a group of parts that are serial number controlled within the volume (operation **2502**). The process then displays the group of parts within the volume on a display system(operation **2504**) with the process terminating thereafter. With this process, an operator uses the display to locate the group of parts within the aircraft.

With reference now to **Figure 26**, an illustration of a flowchart of a process for displaying a group parts on a display is depicted in accordance with an illustrative embodiment. The process illustrated in **Figure 26** is an example of an implementation for operation **2504** in **Figure 25****.**

The process begins by identifying a group of parts that are serial number controlled in a volume (operation **2600**). A determination is made as to whether to display the group of parts in context with other parts that are not serial number controlled within the volume (operation **2602**). If the group of parts is to be displayed in context with other parts in the volume, the process selects a set of graphical indicators for display in association with the group of parts (operation **2604**).

The process then displays the group of parts with the set of graphical indicators on the display system (operation **2606**) with the process terminating thereafter. In this illustrative example, the graphical indicators indicate that the group of parts is a group of serial number controlled parts. In addition, the graphical indicators may also include other information such as whether serial numbers or other unique identifiers have been recorded for the group of parts, whether the unique identifiers have verified, where the part has been installed in the aircraft, and other suitable information.

With reference again to operation **2602**, if the group of parts is to be displayed without a context to other parts in the volume, the process displays the group of parts on the display system (operation **2608**), with the process terminating thereafter. In this instance, graphical indicators are not required because only parts that are serial number controlled are displayed. In other words, other parts in the volume that are not serial number controlled are not displayed to provide a context of the location of the serial number controlled parts with respect to other parts.

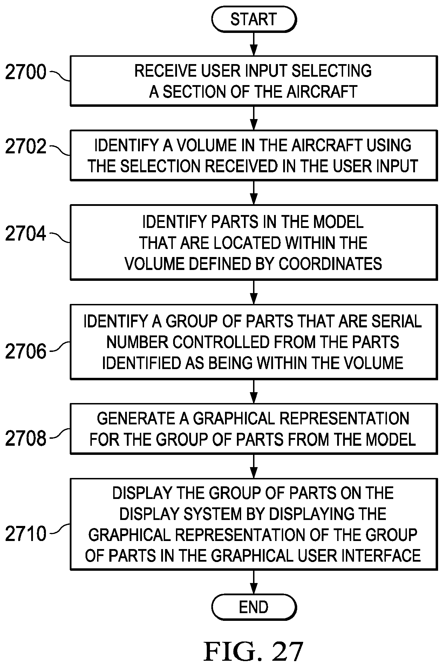

With reference next to **Figure 27**, an illustration of a flowchart of a process for generating a visualization of a section of an aircraft is depicted in accordance with an illustrative embodiment. The process illustrated in **Figure 27** may be implemented in object manager **124** in **Figure 1****.** In particular, the process may be implemented using at least one of status identifier **206** or object visualizer **204.**

The process begins by receiving user input selecting a section of the aircraft (operation **2700**). The section of the aircraft may be a portion of the aircraft or the entire aircraft depending on the particular implementation. The selection may be made through a graphical user interface such as graphical user interface **1100** in **Figure 3****.**

The process then identifies a volume in the aircraft using the selection received in the user input (operation **2702).** In operation **2702**, the volume may be identified using coordinates in a model. These coordinates may be ones pre-defined for various sections that may be displayed to the operator in the graphical user interface.

The process then identifies parts in the model that are located within the volume defined by coordinates (operation **2704).** The parts identified may be parts that are located entirely within the volume, parts that are partially located within the volume, or some combination thereof. Next, a group of parts that are serial number controlled are identified from the parts identified as being within the volume (operation **2706).** The identification in operation **2706** may be performed based on metadata in the model for the parts. The metadata may include indicators as to whether the parts are serial number controlled parts. In another illustrative example, the identification in operation **2706** may be made by comparing the parts identified within the volume with a list of parts that are serial number controlled. In another illustrative example, a list of all parts may be made from parts identified as serial number controlled parts. This list may be used in the reconciliation of the aircraft readiness log that is filed.

The process then generates a graphical representation for the group of parts from the model (operation **2708**). For example, in operation **2708**, the process renders the parts for display on a display system. The process then displays the group of parts on the display system by displaying the graphical representation of the group of parts in the graphical user interface (operation **2710**), with the process terminating thereafter.

With the visualization generated in **Figure 27**, an operator may use the visualization to perform a task defined in a shop order instance. For example, an operator may go to a particular location and examine the aircraft to locate the group of parts and perform operations such as verifying serial numbers, recording serial numbers, or other suitable operations. In yet another example, the shop order instance may be issued during maintenance of an aircraft such that the operator may verify that the parts for maintenance in the aircraft are serial number controlled. In this manner, the operator may identify which parts may need maintenance.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

For example, operations for other functions relating to shop order instances also may be used in addition to or in place of the ones depicted. In one illustrative example, operations may be included to verify or update the status of shop order instances displayed in graphical user interfaces in accordance with an illustrative embodiment. As another illustrative example, operation **2000** and operation **2002** may be omitted when only a single building is present.

As another illustrative example, the display of graphical indicators for the status of assemblies and shop order instances may be omitted in some illustrative examples. As another example, an operator may toggle back and forth between showing other assemblies with the assembly for the shop order instance. In yet other illustrative examples, other types of views may be displayed such as an exploded view based on particular commands received while viewing an assembly for a shop order instance. In still other illustrative examples, the selection of a part or assembly also may display information about the shop order instance associated with the part or assembly.

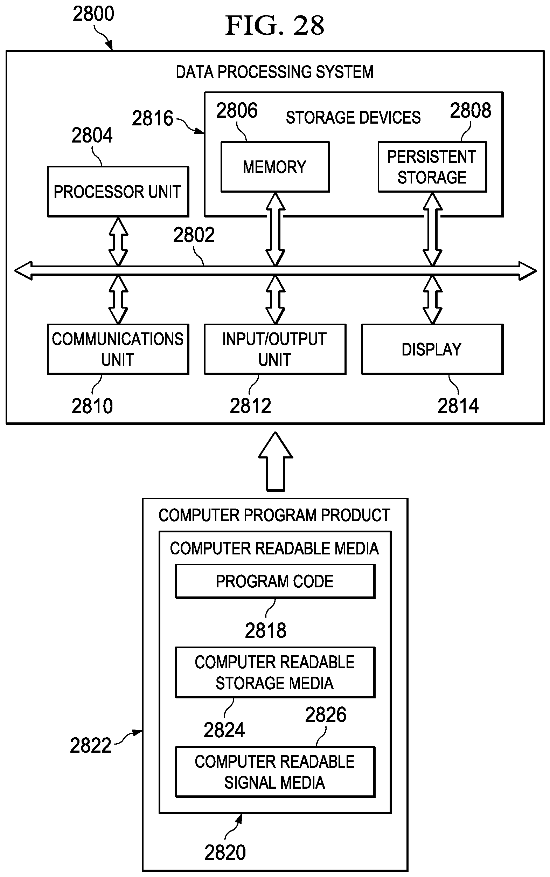

Turning now to **Figure 28**, an illustration of a block diagram of a data processing system is depicted in accordance with an illustrative embodiment. Data processing system **2800** may be used to implement computer system **126** in **Figure 1****.** In this illustrative example, data processing system **2800** includes communications framework **2802**, which provides communications between processor unit **2804**, memory **2806**, persistent storage **2808,** communications unit **2810**, input/output unit **2812**, and display **2814.** In this example, communications framework may take the form of a bus system.

Processor unit **2804** serves to execute instructions for software that may be loaded into memory **2806.** Processor unit **2804** may be a number of processors, a multi-processor core, or some other type of processor, depending on the particular implementation.

Memory **2806** and persistent storage **2808** are examples of storage devices **2816.** A storage device is any piece of hardware that is capable of storing information, such as, for example, without limitation, data, program code in functional form, and/or other suitable information either on a temporary basis and/or a permanent basis. Storage devices **2816** may also be referred to as computer readable storage devices in these illustrative examples. Memory **2806**, in these examples, may be, for example, a random access memory or any other suitable volatile or non-volatile storage device. Persistent storage **2808** may take various forms, depending on the particular implementation.

For example, persistent storage **2808** may contain one or more components or devices. For example, persistent storage **2808** may be a hard drive, a flash memory, a rewritable optical disk, a rewritable magnetic tape, or some combination of the above. The media used by persistent storage **2808** also may be removable. For example, a removable hard drive may be used for persistent storage **2808.**

Communications unit **2810,** in these illustrative examples, provides for communications with other data processing systems or devices. In these illustrative examples, communications unit **2810** is a network interface card.

Input/output unit **2812** allows for input and output of data with other devices that may be connected to data processing system **2800.** For example, input/output unit **2812** may provide a connection for user input through a keyboard, a mouse, and/or some other suitable input device. Further, input/output unit **2812** may send output to a printer. Display **2814** provides a mechanism to display information to a user.

Instructions for the operating system, applications, and/or programs may be located in storage devices **2816,** which are in communication with processor unit **2804** through communications framework **2802**. The processes of the different embodiments may be performed by processor unit **2804** using computer-implemented instructions, which may be located in a memory, such as memory **2806.**

These instructions are referred to as program code, computer usable program code, or computer readable program code that may be read and executed by a processor in processor unit **2804.** The program code in the different embodiments may be embodied on different physical or computer readable storage media, such as memory **2806** or persistent storage **2808.**

Program code **2818** is located in a functional form on computer readable media **2820** that is selectively removable and may be loaded onto or transferred to data processing system **2800** for execution by processor unit **2804.** Program code **2818** and computer readable media **2820** form computer program product **2822** in these illustrative examples.

In one example, computer readable media **2820** may be computer readable storage media **2824** or computer readable signal media **2826.** In these illustrative examples, computer readable storage media **2824** is a physical or tangible storage device used to store program code **2818** rather than a medium that propagates or transmits program code **2818.**

Alternatively, program code **2818** may be transferred to data processing system **2800** using computer readable signal media **2826.** Computer readable signal media **2826** may be, for example, a propagated data signal containing program code **2818.** For example, computer readable signal media **2826** may be an electromagnetic signal, an optical signal, and/or any other suitable type of signal. These signals may be transmitted over communications links, such as wireless communications links, optical fiber cable, coaxial cable, a wire, and/or any other suitable type of communications link.

The different components illustrated for data processing system **2800** are not meant to provide architectural limitations to the manner in which different embodiments may be implemented. The different illustrative embodiments may be implemented in a data processing system including components in addition to and/or in place of those illustrated for data processing system **2800.** Other components shown in **Figure 28** can be varied from the illustrative examples shown. The different embodiments may be implemented using any hardware device or system capable of running program code **2818.**

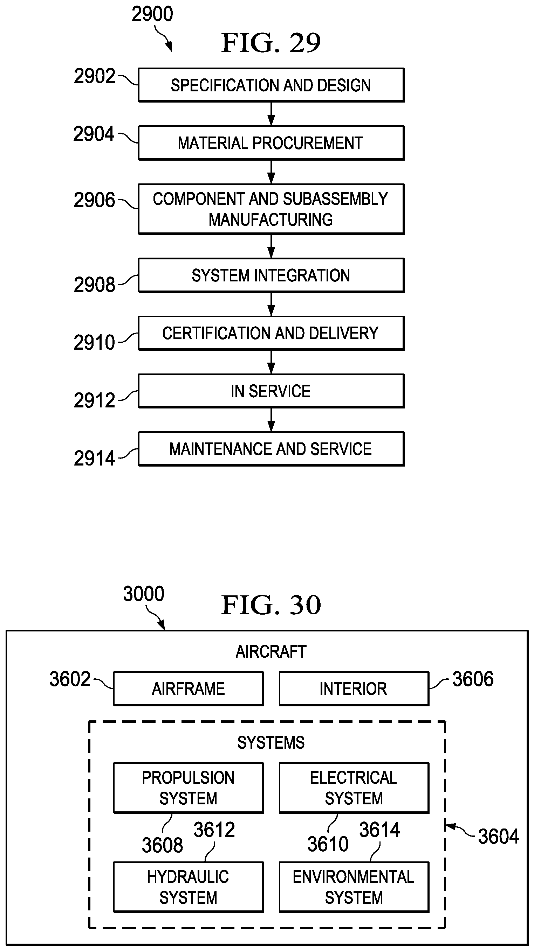

Illustrative embodiments of the disclosure may be described in the context of aircraft manufacturing and service method **2900** as shown in **Figure 29** and aircraft **3000** as shown in **Figure 30**. Turning first to **Figure 29**, an illustration of a block diagram of an aircraft manufacturing and service method is depicted in accordance with an illustrative embodiment. During pre-production, aircraft manufacturing and service method **2900** may include specification and design **2902** of aircraft **3000** in **Figure 30** and material procurement **2904.**

During production, component and subassembly manufacturing **2906** and system integration **2908** of aircraft **3000** in **Figure 30** takes place. Thereafter, aircraft **3000** in **Figure 30** may go through certification and delivery **2910** in order to be placed in service **2912.** While in service **2912** by a customer, aircraft **3000** in **Figure 30** is scheduled for routine maintenance and service **2914,** which may include modification, reconfiguration, refurbishment, and other maintenance or service.

Each of the processes of aircraft manufacturing and service method **2900** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 30**, an illustration of a block diagram of an aircraft is depicted in which an illustrative embodiment may be implemented. In this example, aircraft **3000** is produced by aircraft manufacturing and service method **2900** in **Figure 29** and may include airframe **3002** with systems **3004** and interior **3006.** Examples of systems **3004** include one or more of propulsion system **3008,** electrical system **3010,** hydraulic system **3012,** and environmental system **3014.** Any number of other systems may be included. Although an aerospace example is shown, different illustrative embodiments may be applied to other industries, such as the automotive industry. Apparatuses and methods embodied herein may be employed during at least one of the stages of aircraft manufacturing and service method **2900** in **Figure 29****.**

For example, one or more illustrative embodiments may be implemented during system integration **2908.** The different illustrative examples may be implemented to identify a status of shop order instances used to perform tasks to assemble parts on aircraft **3000.** Additionally, an illustrative embodiment also may be implemented during maintenance and service **2914.** For example, the status of the shop order instances for performance of tasks to assemble parts for maintenance, upgrades, refurbishment, and other operations during maintenance and service **2914** may be identified using an illustrative embodiment.

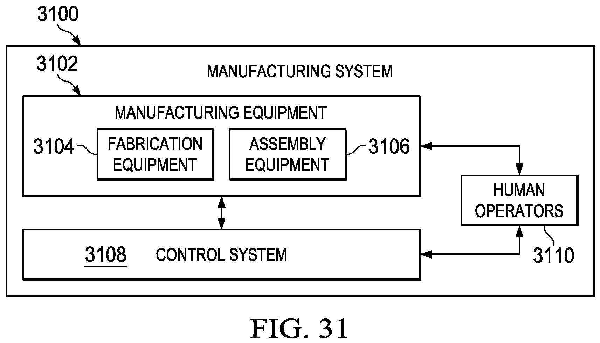

Turning now to **Figure 31**, an illustration of a block diagram of a manufacturing system is depicted in accordance with an illustrative embodiment. Manufacturing system **3100** is a physical hardware system and is configured to manufacture products, such as aircraft **3000** in **Figure 30****.**

As depicted, manufacturing system **3100** includes manufacturing equipment **3102.** Manufacturing equipment **3102** includes at least one of fabrication equipment **3104** or assembly equipment **3106.**

Fabrication equipment **3104** is equipment that may be used to fabricate components for parts used to form aircraft **3000.** For example, fabrication equipment **3104** may include machines and tools. These machines and tools may be at least one of a drill, a hydraulic press, a furnace, a mold, a composite tape laying machine, a vacuum system, a lathe, or other suitable types of equipment. Fabrication equipment **3104** may be used to fabricate at least one of metal parts, composite parts, semiconductors, circuits, fasteners, ribs, skin panels, spars, antennas, pharynx, or other suitable types of parts.

Assembly equipment **3106** is equipment used to assemble parts to form aircraft **3000.** In particular, assembly equipment **3106** may be used to assemble components and parts to form aircraft **3000.** Assembly equipment **3106** also may include machines and tools. These machines and tools may be at least one of a robotic arm, a crawler, a faster installation system, a rail-based drilling system, or a robot. Assembly equipment **3106** may be used to assemble parts such as seats, horizontal stabilizers, wings, engines, engine housings, landing gear systems, and other parts for aircraft **3000.**

Manufacturing system **3100** also includes control system **3108.** Control system **3108** is a hardware system and may also include software or other types of components. Control system **3108** is configured to control the operation of manufacturing equipment **3102.** Control system **3108** may be implemented using hardware. The hardware may include computers, circuits, networks, and other types of equipment. The control may take the form of direct control of manufacturing equipment **3102.** For example, robots, computer-controlled machines, and other equipment may be controlled by control system **3108.** In other illustrative examples, control system **3108** may manage operations performed by human operators **3110** in manufacturing aircraft **3000.** In these illustrative examples, object manager **124** in **Figure 1** may be implemented in control system **3108** to manage the manufacturing of aircraft **3000** in **Figure 30****.**

In the different illustrative examples, human operators **3110** may operate or interact with at least one of manufacturing equipment **3102** or control system **3108.** This interaction may be performed to manufacture aircraft **3000.**

Of course, manufacturing system **3100** may be configured to manufacture other products. Although manufacturing system **3100** has been described with respect to manufacturing in the aerospace industry, manufacturing system **3100** may be configured to manufacture products for other industries. For example, manufacturing system **3100** may be configured to manufacture products for the automotive industry as well as any other suitable industries.

In this manner, operators may visualize information about the status of shop order instances using a graphical user interface. This visualization includes displaying graphical indicators of the status of shop order instances in association with graphical representations of the parts on which tasks are performed.

For example, control system **3108** with object manager **124** may generate shop order instances with respect to parts that are serial number controlled. For example, shop order instances may be generated for human operators **3110** to record unique identifiers, verify previously recorded unique identifiers, perform maintenance on parts that are serial number controlled, and other desired operations with respect to parts that are serial number controlled. The visualization of locations of parts that are serial number controlled may be generated by control system **3108** as part of the shop order instances for use by human operators **3110.**

The visualization of parts that are serial number controlled may allow for operators to more accurately perform operations, more quickly perform operations, or some combination thereof. For example, human operators **3110** may have display devices that are handheld and portable so that they can view the visualization as they travel to locate a part that is serial number controlled.

Further, control system **3108** with object manager **124** may monitor the manufacturing of aircraft **3000.** This monitoring may be through the status of shop order instances as described above. The status of shop order instances may also be used to visually display the status of the manufacturing of aircraft **3000.** This display may be based on the positions in an assembly line for aircraft **3000.**

Additionally, an analysis of the shop order instances may also be used to identify and flag problem areas. These problem areas may be, for example, areas in which completion of shop order instances may be slower than desired, areas in which non-conformances are greater than desired, or other undesirable situations. Control system **3108** may control manufacturing equipment **3102** to halt manufacturing in a problem area until the problem is resolved. In other illustrative examples, control system **3108** may send instructions to human operators **3110** to halt manufacturing and resolve an issue in a problem area.

Thus, with one or more illustrative embodiments, understanding instructions in shop order instances for parts to be assembled form assemblies may be made easier for operators. In one or more illustrative embodiments, the visualization of an assembly of parts for a shop order instance is displayed to an operator. Further, other assemblies that are adjacent to or within some selected distance of the assembly for the shop order instance also are displayed. This display provides a visual context for an operator that has to perform operations for an assembly according to instructions in the shop order instance.

With the visualization of the assembly and other assemblies within a selected distance of the assembly for visual context, the amount of time needed for an operator to comprehend instructions and perform operations to assemble parts to form the assembly may be reduced. As a result, time, training, and expense needed to assemble an object such as an aircraft may be reduced.

As another example, the visualization provides operators **122** an ability to more easily locate serial number controlled parts in an aircraft as compared to currently used techniques. As a result, the manufacturing of aircraft **104** may be performed in less time, with less expense, or some combination thereof.

The description of the different illustrative embodiments has been presented for purposes of illustration and description, and is not intended to be exhaustive or limited to the embodiments in the form disclosed. Many modifications and variations will be apparent to those of ordinary skill in the art.

For example, the illustrative examples may be applied to different states during manufacturing of an object. For example, planned states as well as actual states may be selected for display with respect to obtaining information about tasks such as those in shop order instances. For planned or actual states, the parts actually present in those states may be used when displaying information about shop order instances. This information may include the visualization of the assembly in context with other assemblies as well as other information. In this manner, visualization of assemblies for particular states and shop order instance information may be better visualized. Further, this type of visualization may also make planning or modifying shop order instances less tedious and difficult.

Other illustrative examples may be applied to other parts of a life cycle of an aircraft other than manufacturing. For example, the illustrative examples may be applied to maintenance of an aircraft. An illustrative example may include providing visualization during refurbishment, upgrades, and other operations that may be performed during maintenance of an aircraft.

## Claims

1. A method for visualizing a group of parts (106) in an object (102) during its manufacturing, the method comprising:
receiving an identification of a shop order instance for an assembly (144) of parts;
identifying a volume (219) via a volume identifier (222) in the object (102) for the shop order instance, said volume identifier (222) including a point of view (408) of an operator;
identifying a group of parts (106) that are serial number controlled within the volume (219); and
displaying the assembly (144) and the group of parts (106) within the volume (219), under said point of view (408) of the operator, on a display system (208) to form a visualization, wherein the visualization enables locating the group of serial number controlled parts (106) within the object (102) and aid the operator in performing the assembly (144).

2. The method of claim 1, wherein the object (102) is selected from one of an aircraft, a vehicle, a submarine, a personnel carrier, a tank, a train, an automobile, a bus, a spacecraft, a surface ship, a satellite, a rocket, an engine, a computer, harvesters, construction cranes, bulldozers, and mining equipment.

3. The method of claims 1 or 2 further comprising:
displaying sections (136) of the object (102) in a graphical user interface (207) on the display system (208), wherein the sections (136) correspond to the sections (136) as manufactured for assembly (144) of the object (102), and wherein the sections (136) are selectable; and
wherein identifying the volume (219) based on the shop order instance (132) in the object (102) comprises:
identifying the volume (219) in a model (216) of the object (102) corresponding to a section selected from the sections (136) displayed in the graphical user interface (207).

4. The method of claims 1 or 2, wherein the volume (219) is defined by coordinates (406) in a model (216) of the object (102) .

5. The method of claim 4, wherein identifying the group of parts (106) that are serial number controlled within the volume (219) comprises:
identifying parts (106) in the model (216) that are located within the volume (219) defined by the coordinates (406); and
identifying the group of parts (106) from the parts (106) identified as being within the volume (219).

6. The method of claim 5, wherein displaying the group of parts (106) within the volume (219) on the display system (208) to form the visualization comprises:
generating graphical representations (214) of the group of parts (106) from the model (216); and
displaying the group of parts (106) on the display system (208) by displaying the graphical representations (214) of the group of parts (106) in a graphical user interface (207).

7. The method of claims 1 or 2, wherein the displaying step comprises at least one of:
displaying the group of parts (106) within the volume (219) on the display system (208) in context with other parts in the volume (219); and
displaying the group of parts (106) within the volume (219) on the display system (208) without a context with other parts in the volume (219).

8. The method of claims 1 or 2 further comprising:
displaying a set of graphical indicators (231) in association with the group of parts (106); and
wherein the set of graphical indicators (231) indicates at least one of a presence of a part that is serial number controlled or whether a serial number for the part that is serial number controlled has been verified; and
wherein the set of graphical indicators (231) is selected from at least one of a color, cross hatching, an icon, highlighting, or animation.

9. The method of claims 1 or 2, wherein identifying the volume (219) in the object (102) comprises at least one of:
receiving a user input selecting a portion of the object (102) from sections (136) of the object (102) displayed on a graphical user interface (207); and
receiving a user input selecting the group of parts (106) from a list of parts (106).

10. The method of claims 1 or 2 further comprising:
identifying a group of shop order instances (132) for the group of parts (106) that are serial number controlled; and
displaying a set of graphical indicators (231) in association with the group of parts (106) displayed on the display system (208), wherein the set of graphical indicators (231) indicates a status of shop order instances for at least one of an assembly (144) or a number of assemblies in which the group of parts (106) is located.

11. An aircraft management system comprising an object manager (124) to manage an assembly of parts (144) of an object (102), said object manager being adapted to:
manage tasks (118) using assignments (130) in the form of shop order instances (132) to operators (122) for performance and assembling of the object (102), wherein shop order instances include various types of operations relating to said assembly of parts (144);
identify a volume (219) via a volume identifier (222) in an aircraft (104) for the shop order instance, said volume identifier (222) including a point of view (408) of an operator;
identify a group of parts (106) that are serial number controlled within the volume (219);
and display the assembly (144) and the group of parts (106) within the volume (219), under said point of view (408) of the operator, on a display system (208) to form a visualization of the group of parts (106), wherein the visualization enables locating the group of parts (106) within the aircraft (104) and aid the operator in performing the assembly (144).

12. The aircraft management system of claim 11, wherein the displaying step comprises:
displaying the group of parts (106) within the volume (219) on the display system (208) in context with other parts in the volume (219).

13. The aircraft management system of claim 11, wherein in displaying the group of parts (106) within the volume (219) on the display system (208), the object manager (124) displays the group of parts (106) within the volume (219) on the display system (208) without a context with other parts in the volume (219) .

14. The aircraft management system of claim 11, wherein the object manager (124) displays a set of graphical indicators (231) in association with the group of parts (106);
wherein the set of graphical indicators (231) indicates at least one of a presence of a part that is serial number controlled or whether a serial number for the part that is serial number controlled has been verified; and
wherein the set of graphical indicators (231) is selected from at least one of a color, cross hatching, an icon, highlighting, or animation.

15. The aircraft management system of claim 11, wherein in identifying the volume (219) in the aircraft (104), the object manager (124) receives a user input selecting a portion of the aircraft (104) from sections (136) of the aircraft (104) displayed on a graphical user interface (207); and
wherein in identifying the volume (219) in the aircraft (104), the object manager (124) receives a user input selecting the group of parts (106) from a list of parts (106).

## Patentansprüche

1. Verfahren zum Visualisieren einer Gruppe von Teilen (106) in einem Objekt (102) während der Herstellung, wobei das Verfahren aufweist:
Empfangen einer Identifikation eines Werkstattauftrags für einen Zusammenbau (144) von Teilen;
Identifizieren eines Volumens (219) in dem Objekt (102) mit Hilfe eines Volumen-Identifikators (222) für den Werkstattauftrag, wobei der Volumen-Identifikator (222) einen Standpunkt (408) eines Operators aufweist;
Identifizieren einer Gruppe von Teilen (106), die seriennummerngesteuert sind, in dem Volumen (219); und
Anzeige des Zusammenbaus (144) und der Gruppe von Teilen (106) in dem Volumen (219), vom Standpunkt (408) des Operators, auf einem Anzeigesystem (208), um eine Visualisierung zu bilden,
wobei die Visualisierung ermöglicht, die Gruppe von seriennummerngesteuerten Teilen (106) in dem Objekt (102) zu lokalisieren und den Operator bei der Durchführung des Zusammenbaus (144) zu unterstützen.

2. Verfahren nach Anspruch 1, wobei das Objekt (102) ein aus folgenden Objekten ausgewähltes ist: ein Luftfahrzeug, ein Fahrzeug, ein Unterseeboot, ein Mannschaftwagen, ein Panzer, eine Eisenbahn, ein Automobil, ein Bus, ein Weltraumfahrzeug, ein Überwasserschiff, ein Satellit, eine Rakete, ein Triebwerk, ein Computer, Erntemaschinen, Baukräne, Räumfahrzeuge und Bergbauausrüstung.

3. Verfahren nach Anspruch 1 oder 2, ferner aufweisend:
Anzeigen von Sektionen (136) des Luftfahrzeugs (104) in einer graphischen Benutzerschnittstelle (207) auf dem Anzeigesystem (208), wobei die Sektionen (136) den Sektionen (136) entsprechen, wie sie für den Zusammenbau (144) des Objekts (102) gefertigt sind, und wobei die Sektionen (136) auswählbar sind; und
wobei Identifizieren des Volumens (219) in dem Objekt (102) basierend auf den Werkstattauftrag (132) aufweist:
Identifizieren des Volumens (219) in einem Modell (216) des Objekts (102) entsprechend einer Sektion, die aus den in der graphischen Benutzerschnittstelle (207) angezeigten Sektionen (136) ausgewählt ist.

4. Verfahren nach Anspruch 1 oder 2, wobei das Volumen (219) durch Koordinaten (406) in einem Modell (216) des Objekts (102) definiert ist.

5. Verfahren nach Anspruch 4, wobei Identifizieren der Gruppe von Teilen (106), die seriennummerngesteuert sind, in dem Volumen (219) aufweist:
Identifizieren von Teilen (106) in dem Modell (216), die sich in dem von den Koordinaten (406) definierten Volumen (219) befinden; und
Identifizieren der Gruppe von Teilen (106) aus den Teilen (106), die als in dem Volumen (219) vorhanden identifiziert sind.

6. Verfahren nach Anspruch 5, wobei Anzeigen der Gruppe von Teilen (106) in dem Volumen (219) auf dem Anzeigesystem (208), um die Visualisierung zu bilden, aufweist:
Erzeugen von graphischen Darstellungen (214) der Gruppe von Teilen (106) aus dem Modell (216); und
Anzeigen der Gruppe von Teilen (106) auf dem Anzeigesystem (208) durch Anzeigen der graphischen Darstellungen (214) der Gruppe von Teilen (106) in einer graphischen Benutzerschnittstelle (207).

7. Verfahren nach Anspruch 1 oder 2, wobei der Anzeigeschritt aufweist:
Anzeigen der Gruppe von Teilen (106) in dem Volumen (219) auf dem Anzeigesystem (208) in Zusammenhang mit anderen Teilen in dem Volumen (219); und/oder
Anzeigen der Gruppe von Teilen (106) in dem Volumen (219) auf dem Anzeigesystem (208) ohne einen Zusammenhang mit anderen Teilen in dem Volumen (219).

8. Verfahren nach Anspruch 1 oder 2, ferner aufweisend:
Anzeigen eines Satzes von graphischen Indikatoren (231) in Verknüpfung mit der Gruppe von Teilen (106); und
wobei der Satz von graphischen Indikatoren (231) angibt: Vorhandensein eines Teils, das seriennummerngesteuert ist, und/oder ob eine Seriennummer für das Teil, das seriennummerngesteuert ist, verifiziert worden ist; und
wobei der Satz von graphischen Indikatoren (231) mindestens einen der Folgenden aufweist: Farbe, Kreuzschraffur, Icon, Hervorhebung oder Animation.

9. Verfahren nach Anspruch 1 oder 2, wobei Identifizieren des Volumens (219) in dem Objekt (102) aufweist:
Empfangen einer Benutzereingabe, die einen Abschnitt des Objekts (102) aus den auf einer graphischen Benutzerschnittstelle (207) angezeigten Sektionen (136) des Objekts (102) auswählt; und/oder
Empfangen einer Benutzereingabe, die die Gruppe von Teilen (106) aus einer Liste von Teilen (106) auswählt.

10. Verfahren nach Anspruch 1 oder 2, ferner aufweisend:
Identifizieren einer Gruppe von Werkstattaufträgen (132) für die Gruppe von Teilen (106), die seriennummerngesteuert sind; und
Anzeigen eines Satzes von graphischen Indikatoren (231) in Verknüpfung mit der auf dem Anzeigesystem (208) angezeigten Gruppe von Teilen (106), wobei der Satz von graphischen Indikatoren (231) einen Status der Werkstattaufträge für einen Zusammenbau (144) und/oder eine Anzahl von Zusammenbauten, worin sich die Gruppe von Teilen (106) befindet, angibt.

11. Luftfahrzeug-Managementsystem, aufweisend einen Objektmanager (124), um einen Zusammenbau von Teilen (144) eines Objekts (102) zu verwalten, wobei der Objektmanager konfiguriert ist, um:
Aufgaben (118) zu verwalten, wobei Anweisungen (130) in Form von Werkstattaufträgen (132) an Operatoren (122) zur Durchführung und Zusammenbauen des Objekts (102) verwendet werden, wobei Werkstattaufträge verschiedene Typen von Arbeiten betreffend den Zusammenbau von Teilen (144) aufweisen;
Identifizieren eines Volumens (219) in einem Luftfahrzeug (104) mit Hilfe eines Volumen-Identifikators (222) für den Werkstattauftrag, wobei der Volumen-Identifikator (222) einen Standpunkt (408) eines Operators aufweist;
Identifizieren einer Gruppe von Teilen (106), die seriennummerngesteuert sind, in dem Volumen (219); und
Anzeigen des Zusammenbaus (144) und der Gruppe von Teilen (106) in dem Volumen (219), vom Standpunkt (408) des Operators, auf einem Anzeigesystem (208), um eine Visualisierung der Gruppe von Teilen (106) zu bilden, wobei die Visualisierung ermöglicht, die Gruppe von Teilen (106) in dem Luftfahrzeug (104) zu lokalisieren und den Operator bei der Durchführung der Zusammenbau (144) zu unterstützen.

12. Luftfahrzeug-Managementsystem nach Anspruch 11, wobei der Anzeigeschritt aufweist:
Anzeigen der Gruppe von Teilen (106) in dem Volumen (219) auf dem Anzeigesystem (208) in Zusammenhang mit anderen Teilen in dem Volumen (219).

13. Luftfahrzeug-Managementsystem nach Anspruch 11, wobei beim Anzeigen der Gruppe von Teilen (106) in dem Volumen (219) auf dem Anzeigesystem (208) der Objektmanager (124) die Gruppe von Teilen (106) in dem Volumen (219) auf dem Anzeigesystem (208) ohne einen Zusammenhang mit anderen Teilen in dem Volumen (219) anzeigt.

14. Luftfahrzeug-Managementsystem nach Anspruch 11, wobei der Objektmanager (124) einen Satz von graphischen Indikatoren (231) in Verknüpfung mit der Gruppe von Teilen (106) anzeigt;
wobei der Satz von graphischen Indikatoren (231) angibt: Vorhandensein eines Teils, das seriennummerngesteuert ist, und/oder ob eine Seriennummer für das Teil, das seriennummerngesteuert ist, verifiziert worden ist; und
wobei der Satz von graphischen Indikatoren (231) mindestens einen der Folgenden aufweist: Farbe, Kreuzschraffur, Icon, Hervorhebung oder Animation.

15. Luftfahrzeug-Managementsystem nach Anspruch 11, wobei beim Identifizieren des Volumens (219) in dem Luftfahrzeug (104) der Objektmanager (124) eine Benutzereingabe empfängt, die einen Abschnitt des Luftfahrzeugs (104) aus den auf einer graphischen Benutzerschnittstelle (207) angezeigten Sektionen (136) des Luftfahrzeugs (104) auswählt; und
wobei beim Identifizieren des Volumens (219) in dem Luftfahrzeug (104) der Objektmanager (124) eine Benutzereingabe empfängt, die die Gruppe von Teilen (106) aus einer Liste von Teilen (106) auswählt.

## Revendications

1. Procédé de visualisation d'un groupe de pièces (106) dans un objet (102) durant sa fabrication, le procédé comprenant :
la réception d'une identification d'un cas de commandes de magasin pour un assemblage (144) de pièces ;
l'identification d'un volume (219) via un identificateur de volume (222) dans l'objet (102) pour le cas de commandes de magasin, ledit identificateur de volume (222) incluant un point de vue (408) d'un opérateur ;
l'identification d'un groupe de pièces (106) qui sont commandées par un numéro de série au sein du volume (219) ; et
l'affichage de l'assemblage (144) et du groupe de pièces (106) au sein du volume (219), sous ledit point de vue (408) de l'opérateur, sur un système d'affichage (208) pour former une visualisation,
dans lequel la visualisation permet de localiser le groupe de pièces commandées par un numéro de série (106) au sein de l'objet (102) et d'aider l'opérateur dans la réalisation de l'assemblage (144).

2. Procédé selon la revendication 1, dans lequel l'objet (102) est sélectionné parmi l'un parmi un aéronef, un véhicule, un sous-marin, un véhicule de transport de personnel, un tank, un train, une automobile, un bus, un véhicule spatial, un navire de surface, un satellite, une fusée, un moteur, un ordinateur, une moissonneuse, des grues de construction, des bulldozers, et du matériel d'exploitation minière.

3. Procédé selon les revendications 1 ou 2 comprenant en outre :
l'affichage de sections (136) de l'objet (102) dans une interface utilisateur graphique (207) sur le système d'affichage (208), dans lequel les sections (136) correspondent aux sections (136) telles que fabriquées pour l'assemblage (144) de l'objet (102), et dans lequel les sections (136) peuvent être sélectionnées ; et
dans lequel l'identification du volume (219) basée sur le cas de commandes de magasin (132) dans l'objet (102) comprend :
l'identification du volume (219) dans un modèle (216) de l'objet (102) correspondant à une section sélectionnée parmi les sections (136) affichées dans l'interface utilisateur graphique (207).

4. Procédé selon les revendications 1 ou 2, dans lequel le volume (219) est défini par des coordonnées (406) dans un modèle (216) de l'objet (102).

5. Procédé selon la revendication 4, dans lequel l'identification du groupe de pièces (106) qui sont commandées par un numéro de série au sein du volume (219) comprend :
l'identification de pièces (106) dans le modèle (216) qui sont localisées au sein du volume (219) défini par les coordonnées (406) ; et
l'identification du groupe de pièces (106) à partir des pièces (106) identifiées comme étant au sein du volume (219).

6. Procédé selon la revendication 5, dans lequel l'affichage du groupe de pièces (106) au sein du volume (219) sur le système d'affichage (208) pour former la visualisation comprend :
la génération de représentations graphiques (214) du groupe de pièces (106) à partir du modèle (216) ; et
l'affichage du groupe de pièces (106) sur le système d'affichage (208) en affichant les représentations graphiques (214) du groupe de pièces (106) dans une interface utilisateur graphique (207).

7. Procédé selon les revendications 1 ou 2, dans lequel l'étape d'affichage comprend au moins l'un parmi :
l'affichage du groupe de pièces (106) au sein du volume (219) sur le système d'affichage (208) en contexte avec d'autres pièces dans le volume (219) ; et
l'affichage du groupe de pièces (106) au sein du volume (219) sur le système d'affichage (208) sans contexte avec d'autres pièces dans le volume (219).

8. Procédé selon les revendications 1 ou 2 comprenant en outre :
l'affichage d'un ensemble d'indicateurs graphiques (231) en association avec le groupe de pièces (106) ; et
dans lequel l'ensemble d'indicateurs graphiques (231) indique au moins l'une d'une présence d'une pièce qui est commandée par un numéro de série ou si un numéro de série pour la pièce qui est commandée par un numéro de série a été vérifié ; et
dans lequel l'ensemble d'indicateurs graphiques (231) est sélectionné parmi au moins l'un parmi une couleur, des hachures croisées, une icône, un surlignage, ou une animation.

9. Procédé selon les revendications 1 ou 2, dans lequel l'identification du volume (219) dans l'objet (102) comprend au moins l'un parmi :
la réception d'une entrée utilisateur sélectionnant une partie de l'objet (102) à partir de sections (136) de l'objet (102) affichées sur une interface utilisateur graphique (207) ; et
la réception d'une entrée utilisateur sélectionnant le groupe de pièces (106) à partir d'une liste de pièces (106).

10. Procédé selon les revendications 1 ou 2 comprenant en outre :
l'identification d'un groupe de cas de commandes de magasin (132) pour le groupe de pièces (106) qui sont commandées par un numéro de série ; et
l'affichage d'un ensemble d'indicateurs graphiques (231) en association avec le groupe de pièces (106) affichés sur le système d'affichage (208), dans lequel l'ensemble d'indicateurs graphiques (231) indique un statut de cas de commandes de magasin pour au moins l'un parmi un assemblage (144) ou un nombre d'assemblages dans lequel le groupe de pièces (106) est localisé.

11. Système de gestion d'aéronef comprenant un gestionnaire d'objets (124) pour gérer un assemblage de pièces (144) d'un objet (102), ledit gestionnaire d'objets étant conçu pour :
gérer des tâches (118) à l'aide d'attributions (130) sous forme de cas de commandes de magasin (132) à des opérateurs (122) pour la réalisation et l'assemblage de l'objet (102), dans lequel les cas de commandes de magasin incluent divers types d'opérations liées audit assemblage de pièces (144) ;
identifier un volume (219) via un identificateur de volume (222) dans un aéronef (104) pour le cas de commandes de magasin, ledit identificateur de volume (222) incluant un point de vue (408) d'un opérateur ;
identifier un groupe de pièces (106) qui sont commandées par un numéro de série au sein du volume (219) ;
et afficher l'assemblage (144) et le groupe de pièces (106) au sein du volume (219), sous ledit point de vue (408) de l'opérateur, sur un système d'affichage (208) pour former une visualisation du groupe de pièces (106), dans lequel la visualisation permet la localisation du groupe de pièces (106) au sein de l'aéronef (104) et aide l'opérateur à réaliser l'assemblage (144).

12. Système de gestion d'aéronef selon la revendication 11, dans lequel l'étape d'affichage comprend :
l'affichage du groupe de pièces (106) au sein du volume (219) sur le système d'affichage (208) en contexte avec d'autres pièces dans le volume (219).

13. Système de gestion d'aéronef selon la revendication 11, dans lequel dans l'affichage du groupe de pièces (106) au sein du volume (219) sur le système d'affichage (208), le gestionnaire d'objets (124) affiche le groupe de pièces (106) au sein du volume (219) sur le système d'affichage (208) sans contexte avec d'autres pièces dans le volume (219).

14. Système de gestion d'aéronef selon la revendication 11, dans lequel le gestionnaire d'objets (124) affiche un ensemble d'indicateurs graphiques (231) en association avec le groupe de pièces (106) ;
dans lequel l'ensemble d'indicateurs graphiques (231) indique au moins l'une d'une présence d'une pièce qui est commandée par un numéro de série ou si un numéro de série pour la pièce qui est commandée par un numéro de série a été vérifié ; et
dans lequel l'ensemble d'indicateurs graphiques (231) est sélectionné parmi au moins l'un parmi une couleur, des hachures croisées, une icône, un surlignage, ou une animation.

15. Système de gestion d'aéronef selon la revendication 11, dans lequel dans l'identification du volume (219) dans l'aéronef (104), le gestionnaire d'objets (124) reçoit une entrée utilisateur sélectionnant une partie de l'aéronef (104) à partir de sections (136) de l'aéronef (104) affichées sur une interface utilisateur graphique (207) ; et
dans lequel dans l'identification du volume (219) dans l'aéronef (104), le gestionnaire d'objets (124) reçoit une entrée utilisateur sélectionnant le groupe de pièces (106) à partir d'une liste de pièces (106).
